# EUROPÄISCHE PATENTSCHRIFT

(11) **EP 4 148 270 B1**
(45) Veröffentlichungstag und Bekanntmachung des Hinweises auf die Patenterteilung: **08.10.2025**
(21) Anmeldenummer: 21195819.4
(22) Anmeldetag: 09.09.2021
(51) Int. Cl.: F03D 7/02, F03D 7/04

(54) **VERFAHREN ZUM ANPASSEN EINER BETRIEBSKENNLINIE EINER WINDENERGIEANLAGE**
METHOD FOR ADJUSTING A CHARACTERISTIC CURVE OF A WIND TURBINE
PROCÉDÉ D'AJUSTEMENT D'UNE COURBE CARACTÉRISTIQUE DE FONCTIONNEMENT D'UNE ÉOLIENNE

(43) Veröffentlichungstag der Anmeldung: 15.03.2023
(73) Patentinhaber: Wobben Properties GmbH, 26607 Aurich (DE)
(72) Erfinder: Messing, Ralf, 26605 Aurich (DE); Schnell, Hendrik, 26605 Aurich (DE); Harms, Harro, 26639 Wiesmoor (DE); Kartal, Kemal, 27574 Bremerhaven (DE)
(74) Vertreter: Eisenführ Speiser

(56) Entgegenhaltungen:
- EP-A2- 2 463 520
- WO-A1-2020/007629
- WO-A1-2020/064925
- DE-A1- 102018 100 127

## Beschreibung

Die vorliegende Erfindung betrifft ein Verfahren zum Anpassen einer Betriebskennlinie einer Windenergieanlage und sie betrifft ein Verfahren zum Steuern einer Windenergieanlage. Außerdem betrifft die vorliegende Erfindung eine entsprechende Windenergieanlage, die ein entsprechendes Verfahren zum Steuern einsetzt und/oder eine angepasste Betriebskennlinie einsetzt.

Windenergieanlagen sind bekannt, sie erzeugen elektrische Leistung aus Wind. Dafür wird ein aerodynamischer Rotor durch den Wind gedreht und mittels eines damit verbundenen Generators elektrische Leistung erzeugt. Die Drehzahl des Rotors, also die Rotordrehzahl und die elektrische Leistung des Generators können gesteuert werden. Drehzahl und Leistung hängen voneinander ab und statt der Leistung kann auch das Drehmoment des Generators, also das Generatordrehmoment, eingestellt werden, bzw. die Leistung kann durch Einstellen des Drehmomentes des Generators eingestellt werden.

Zum Einstellen der Generatorleistung oder des Generatordrehmomentes werden häufig Betriebskennlinien verwendet, zumindest für einen Teillastbereich, in dem die Windgeschwindigkeit noch keine Nennwindgeschwindigkeit erreicht hat. Häufig kann eine solche Betriebskennlinie aber auch noch in einem Übergang von einem Teillastbereich in den Volllastbereich vorhanden sein, wobei der Volllastbereich einen Bereich beschreibt, bei dem die Windgeschwindigkeit Nennwindgeschwindigkeit erreicht hat oder darüber liegt.

Das Vorgeben einer Betriebskennlinie soll insbesondere einen optimalen Betriebspunkt der Windenergieanlage für die jeweilige Windgeschwindigkeit vorgeben. Ein solcher optimaler Betriebspunkt ist ein Merkmal bei der maximalen Leistung aus dem Wind entnommen wird.

Es sind aber auch Belastungen der Windenergieanlage zu berücksichtigen. Insbesondere belasten hohe Rotordrehzahlen die Windenergieanlage meist stärker als niedrigere Rotordrehzahlen. Eine Art der Belastungen ist hierbei eine sog. Schwenklast. Eine Schwenklast ist eine Last, die sich aus der Gewichtskraft auf das Rotorblatt ergibt, insbesondere im Bereich der Blattwurzel, in dem das Rotorblatt an einer Nabe der Windenergieanlage befestigt ist. Problematisch kann nicht nur der unmittelbare Befestigungsbereich sein, sondern auch ein Übergangsbereich, der zur Blattwurzel führt oder als Teil der Blattwurzel verstanden werden kann. Besonders gibt es häufig einen Übergang zwischen einem metallischen Anschlussbereich und einem Bereich aus anderem Werkstoff, insbesondere glasfaserverstärktem Kunststoff.

Besonders die langsame konstante Rotordrehzahl führt dazu, dass eine maximale Schwenklast etwa in einer 3 Uhr Stellung und einer 9 Uhr Stellung auf das Rotorblatt bzw. besonders den Bereich der Blattwurzel wirkt. In diesen beiden Stellungen ist das Rotorblatt also jeweils für den betrachteten Moment waagerecht und dadurch wirkt die maximale Schwerkraft auf das Rotorblatt. Diese Belastung ist bei der 3 Uhr Stellung und der 9 Uhr Stellung entgegengesetzt. Natürlich gibt es auch in den Stellungen dazwischen eine Belastung durch die Schwerkraft. In den beiden genannten Positionen ist sie allerdings am stärksten und die Positionen eignen sich auch am besten zur Beschreibung des Problems.

Mit jeder Drehung des aerodynamischen Rotors wechselt somit die Richtung der Schwenklast zweimal und dieser Richtungswechsel führt insbesondere zu der Belastung. Es kann auch diese insgesamt entstehende Belastung, also einschließlich der Belastung durch den Lastwechsel als Schwenklast bezeichnet werden.

Solche Schwenklasten überlagern sich zu anderen Lasten, auf die es im vorliegenden Fall nicht wesentlich ankommt und die zur Erläuterung des Problems vernachlässigt werden können. Demnach liegen also zwei Lastwechsel pro Rotorumdrehung für jedes Rotorblatt vor und somit hängt die Anzahl der Lastwechsel unmittelbar mit der Anzahl der Umdrehungen zusammen. Je schneller der Rotor sich dreht, umso häufiger gibt es also einen Lastwechsel und entsprechend ist die Belastung durch Schwenklasten entsprechend hoch.

Um dieses Problem zu adressieren, ist eine Windenergieanlage üblicherweise dazu ausgelegt, dass sie eine bestimmte Anzahl von Lastwechseln über ihre Lebensdauer aushalten kann. Im Grunde ist dabei die Windenergieanlage für eine bestimmte Anzahl von Lastwechseln über ihre Lebenszeit ausgelegt, und das bedeutet, dass sie für eine absolute Anzahl von Rotorumdrehungen ausgelegt ist.

Somit ist eine Windenergieanlage zwar für solche Schwenklasten ausgelegt, die Belastung erhöht sich aber, wenn die Drehzahl erhöht wird, weil dann insgesamt mehr Drehungen auftreten und damit mehr Lastwechsel auftreten, sodass die Belastung durch Schwenklasten zunimmt und damit auch potenziell ein zulässiges Maß überschreiten kann.

Das kann besonders dazu führen, dass eine Drehzahlerhöhung nicht möglich ist, selbst wenn eine Drehzahlerhöhung ansonsten, insbesondere aufgrund übriger Belastungen, durchgeführt werden könnte. Das hat den Nachteil, dass auch eine Leistungserhöhung, die durch eine Drehzahlerhöhung erreicht werden könnte, nicht durchgeführt werden kann. Die zusätzlichen Schwenklasten können also dazu führen, dass eine ansonsten mögliche Leistungserhöhung nicht durchgeführt werden kann.

Die internationale Offenlegungsschrift WO 2020/007629 A1 betrifft ein Verfahren zum Betreiben mehrerer Windenergieanlagen, bei dem eine erste Windenergieanlage benachbart zu einer zweiten Windenergieanlage und einer dritten Windenergieanlage angeordnet ist. Die Drehzahl der zweiten und dritten Windenergieanlage werden angepasst, um die Tonhaltigkeit der ersten Windenergieanlage zu kaschieren.

Die europäische Patentanmeldung EP 2463520 A2 betrifft ein Verfahren zum Betrieb einer pitchgeregelten Windenergieanlage bei der abhängig von einer Drehzahl des Generators oder des Rotors ein Sollwert M für das Generatormoment vorgegeben wird, wobei ein Übergangspunkt vorgesehen ist, in dem ein Übergang aus einem Teillastbetrieb in einen Nennlastbetrieb erfolgt.

Die internationale Anmeldung mit der Veröffentlichungsnummer WO 2020/064925 A1 betrifft ein Verfahren zum Betreiben einer Windenergieanlage, wobei eine Turbulenzklasse an einem Standort der Windenergieanlage bestimmt und die Rotordrehzahl in Abhängigkeit von der bestimmten Turbulenzklasse festgelegt wird.

Der vorliegenden Erfindung liegt somit die Aufgabe zugrunde, zumindest eins der vorgenannten Probleme zu adressieren. Insbesondere soll eine Lösung geschaffen werden, bei der eine Drehzahlerhöhung, besonders zur Leistungserhöhung, ermöglicht wird, ohne ein zulässiges Maß der Schwenklasten zu überschreiten. Insbesondere wird eine Lösung vorgeschlagen, die eine Erhöhung der Gesamtenergieausbeute der Windenergieanlage zumindest der jährlichen Energieproduktion bei Einhaltung zulässiger Schwenklasten erhöht oder auf einem hohen Niveau ermöglicht. Zumindest soll zu bisher bekannten Lösungen eine alternative Lösung vorgeschlagen werden.

Erfindungsgemäß wird ein Verfahren nach Anspruch 1 vorgeschlagen. Das Verfahren betrifft somit das Anpassen einer Betriebskennlinie einer Windenergieanlage. Die Windenergieanlage weist einen Rotor mit in ihren Blattwinkel verstellbaren Rotorblättern auf. Ein solches Verstellen der Rotorblätter wird auch als Pitchen bezeichnet. Der Rotor, also der aerodynamische Rotor der Windenergieanlage, ist mit variabler Rotordrehzahl betreibbar. Das bedeutet insbesondere auch, dass der verwendete Generator der Windenergieanlage ebenfalls mit variabler Drehzahl betreibbar ist.

Zum Steuern der Windenergieanlage wird eine Betriebskennlinie verwendet, die einen Zusammenhang zwischen der Rotordrehzahl und wenigstens einer weiteren Betriebsgröße beschreibt. Insbesondere kommen hier zwei Arten der Betriebskennlinien in Betracht, bei der die eine einen Zusammenhang zwischen der Rotordrehzahl und der Leistung beschreibt, während eine andere einen Zusammenhang zwischen der Rotordrehzahl und einem Generatordrehmoment des Generators beschreibt.

Das Grundprinzip solcher Betriebskennlinien ist ansonsten aber ähnlich oder gleich. Es wird in Abhängigkeit von einer erfassten Drehzahl die weitere Betriebsgröße, also insbesondere die Leistung oder das Generatordrehmoment, eingestellt und damit der Betriebspunkt festgelegt. Dabei kann es sein, dass die eingestellte Leistung oder das eingestellte Generatordrehmoment noch nicht zu einem stabilen Betriebspunkt führt, also nicht zur Windgeschwindigkeit passt, sodass sich die Drehzahl verändert und dann ein neuer Wert für die Betriebsgröße eingestellt wird bis sich ein stabiler Betriebspunkt ergibt.

Es wird vorgeschlagen, dass die Betriebskennlinie einen ersten Kennlinienabschnitt mit einem ersten Drehzahlbereich und einen zweiten Kennlinienabschnitt mit einem zweiten Drehzahlbereich aufweist. Der Begriff Drehzahl wird hier auch synonym für den Begriff Rotordrehzahl verwendet. Dabei weist der erste Drehzahlbereich kleinere Drehzahlen auf, als der zweite Drehzahlbereich.

Dazu wird nun vorgeschlagen, dass die Betriebskennlinie so angepasst wird, dass Werte der Betriebsgröße des ersten Kennlinienabschnitts erhöht und Werte der Betriebsgröße des zweiten Kennlinienabschnitts zu höheren Drehzahlen hin verändert werden.

Außerdem wird vorgeschlagen, dass die Anpassung der Betriebskennlinie so erfolgt, dass eine erwartete Gesamtanzahl Drehungen des Rotors über eine vorgegebene Laufzeit der Windenergieanlage etwa gleich bleibt.

Die Betriebsgröße ist insoweit natürlich nicht die Rotordrehzahl. Insbesondere kann die Betriebsgröße eine Abgabeleistung oder ein Generatordrehmoment sein. Die Abgabeleistung entspricht der Generatorleistung, zumindest können bei der vorliegenden Betrachtung etwaige Unterschiede, die durch Verlustleistung hervorgerufen sein können, vernachlässigt werden. Der Einfachheit halber wird synonym für die Generatorleistung oder Abgabeleistung nur der Begriff Leistung verwendet.

Der Zweck der Betriebskennlinie besteht darin, einen stabilen und geeigneten Betriebspunkt für die jeweilige Windsituation auszuwählen. Dafür kann in Abhängigkeit von der Rotordrehzahl eine durch die Betriebskennlinie vorgegebene Leistung oder ein durch die Betriebskennlinie vorgegebenes Generatordrehmoment eingestellt werden. Der Einfachheit halber wird der Zusammenhang anhand der Leistung erläutert. Bei Verwendung des Generatordrehmomentes als Betriebsgröße wird sinngemäß ganz ähnlich vorgegangen, was dem Fachmann im Übrigen bekannt ist.

Es wird also eine Leistung in Abhängigkeit von der Rotordrehzahl gemäß Betriebskennlinie eingestellt. Entspricht diese Leistung der Leistung, die aus dem Wind durch den aerodynamischen Rotor entnommen wird, ist der stabile Betriebspunkt gefunden worden, der sich natürlich mit ändernder Windgeschwindigkeit wieder ändert. Ist der Wind aber stärker, so entnimmt der Rotor Leistung aus dem Wind und beschleunigt sich, somit erhöht sich die Drehzahl. Andernfalls verringert sich die Drehzahl. Erhöht sich also die Drehzahl, wird aus der Betriebskennlinie ein neuer Wert für die Leistung abgelesen und eingestellt und dieser Vorgang wird so lange wiederholt, bis diese Leistung der in dem Moment aus dem Wind entnommenen Leistung entspricht.

Ganz ähnlich wird im Fall eines Generatordrehmomentes als Betriebsgröße vorgegangen. Hier wird das Generatordrehmoment gemäß Kennlinie solange eingestellt, bis es dem Drehmoment entspricht, dass sich aus der Einwirkung des Windes auf den aerodynamischen Rotor ergibt.

Die Betriebskennlinie ist üblicherweise eine monoton steigende Kennlinie, insbesondere eine streng monoton steigende Kennlinie.

Werden zu festen Drehzahlwerten Werte der Betriebsgröße im ersten Kennlinienabschnitt erhöht, bedeutet das, dass zu festen Werten der Betriebsgröße Drehzahlwerte verringert werden. Das liegt daran, dass die Betriebskennlinie, jedenfalls im ersten Kennlinienabschnitt, ansteigt. Sie nach oben zu verschieben ist wie sie nach links zu verschieben, um es anschaulich auszudrücken. Wird bei einer bestimmten Drehzahl der Leistungswert oder das Drehmoment erhöht, bremst das die Drehzahl ab, es kommt also zu einer geringeren Drehzahl. Das Erhöhen der Betriebsgröße hat also die Wirkung, die Drehzahl zu verringern.

Es wird außerdem vorgeschlagen, dass der zweite Kennlinienabschnitt zu höheren Drehzahlen hin verändert wird. Zur Veränderung der Betriebskennlinie wird bei diesem Aspekt besonders vorgeschlagen, dass die Rotordrehzahl auch über eine bisherige maximale Rotordrehzahl, insbesondere über die bisherige Rotornenndrehzahl hinausgeht. Reichte der zweite Kennlinienabschnitt also bisher bis zur Nenndrehzahl, kann der jetzt bis zu einem Wert oberhalb der Nenndrehzahl reichen. Das können z.B. 5 % - 10 % sein, bezogen auf die bisherige Nenndrehzahl. Die Rotornenndrehzahl kann vereinfacht und synonym auch als Nenndrehzahl bezeichnet werden.

Entsprechend führen die vorgeschlagenen Veränderungen der Betriebskennlinie dazu, dass die Windenergieanlage im zweiten Kennlinienabschnitt mit höherer Drehzahl betrieben wird. Bei gleichen Windverhältnissen ist dann die Rotordrehzahl also höher.

Entsprechend ist es im ersten Kennlinienabschnitt genau umgekehrt. Das Erhöhen der Werte der Betriebsgröße führt also dazu, dass diese Werte der Betriebsgröße geringeren Rotordrehzahlen als bisher zugeordnet sind. Bei gleichen Windverhältnissen wird die Windenergieanlage also im ersten Kennlinienabschnitt mit geringerer Drehzahl betrieben.

Erfindungsgemäß läuft die Windenergieanlage also im zweiten Kennlinienabschnitt mit höherer Drehzahl und im ersten Kennlinienabschnitt mit niedrigerer Drehzahl. Dadurch kann im zweiten Kennlinienabschnitt auch eine höhere Leistung erzeugt werden. Die höhere Drehzahl, die zu höheren Schwenklasten führt, wird dadurch ausgeglichen, dass im ersten Kennlinienabschnitt die Anlage mit geringerer Drehzahl betrieben wird und damit dort die Schwenklasten verringert werden.

Meist kann eine solche Anpassung der Betriebskennlinie durchgeführt werden, nachdem die Windenergieanlage bereits wenigstens ein Jahr betrieben wurde, insbesondere bereits mehrere Jahre betrieben wurde. Dann liegen ausreichend Messwerte zum Standort der Windenergieanlage vor, die eine gute Vorhersage ermöglichen, wie und wie lange die Windenergieanlage im ersten Kennlinienabschnitt und auch im zweiten Kennlinienabschnitt betrieben werden wird. Dadurch kann die Betriebskennlinie recht genau so angepasst werden, dass eine erwartete Gesamtanzahl Drehungen des Rotors gut vorhergesagt werden kann und damit über die Betriebskennlinie eine Einstellung so vorgenommen werden kann, dass die erwartete Gesamtanzahl Drehungen des Rotors über die vorgebbare Laufzeit der Windenergieanlage etwa gleich bleibt.

Die vorgegebene Laufzeit der Windenergieanlage betrifft insbesondere die maximale Lebensdauer für die die Windenergieanlage ausgelegt ist. Gegebenenfalls kommt aber auch in Betracht, dass eine solche vorgegebene Laufzeit neu berechnet und damit neu vorgegeben wird. Vorzugsweise wird aber von einer unverändert vorgegebenen Laufzeit ausgegangen, die also für die bisherige Betriebskennlinie und auch für die angepasste Betriebskennlinie gleich ist.

Hier wurde besonders erkannt, dass bei Einhaltung bzw. Beachtung von Belastungsgrenzen, die also nicht überschritten werden dürfen, eine solche Drehzahlerhöhung möglich ist. In jedem Fall würde eine Erhöhung der Schwenklast erfolgen, die aber durch das Reduzieren der Drehzahl im ersten Drehzahlbereich, also im ersten Kennlinienabschnitt ausgeglichen werden kann. Dadurch kann eine Leistungserhöhung erreicht werden, die deutlich höher ist als eine Leistungsverringerung durch die ausgleichende Drehzahlreduzierung im ersten Kennlinienabschnitt, also im ersten Drehzahlbereich.

Gemäß einem Aspekt wird vorgeschlagen, dass der erste Drehzahlbereich oberhalb einer Einschaltdrehzahl bis zu einer Übergangsdrehzahl liegt, wobei die Übergangsdrehzahl im Bereich von 80 % - 100 % einer Nenndrehzahl liegt, und dass der zweite Drehzahlbereich bei und oberhalb der Übergangsdrehzahl liegt. Somit wird besonders vorgeschlagen, dass der zweite Drehzahlbereich und damit der zweite Kennlinienabschnitt bei relativ hohen Drehzahlen liegt.

Wenn die Übergangsdrehzahl 100% beträgt, liegt der zweite Kennlinienabschnitt, jedenfalls vor der Veränderung, bei 100% der Nenndrehzahl und bildet damit einen senkrechten Kennlinienabschnitt, was auch als senkrechter Ast bezeichnet werden kann. Seine Veränderung zu höheren Drehzahlen hin kann eine Verschiebung dieses senkrechten Astes bedeuten.

Besonders wurde erkannt, dass bei hohen Drehzahlen eine weitere, teilweise auch geringe Drehzahlerhöhung zu einer vergleichsweise großen Leistungserhöhung führen kann. Das liegt besonders daran, dass eine Betriebskennlinie, insbesondere wird eine solche Betriebskennlinie vorgeschlagen, zu solchen höheren Drehzahlen hin, also Drehzahlen oberhalb von 80 % der Nenndrehzahl, vergleichsweise steil ist. Einer geringen Drehzahlerhöhung ist also eine große Leistungserhöhung zugeordnet. Entsprechend ist eine solche Betriebskennlinie bei geringeren Drehzahlen, insbesondere unterhalb von 80 % der Nenndrehzahl, vergleichsweise flach, sodass große Drehzahlverringerungen nur zu geringen Leistungsverringerungen führen. Dadurch kann in dem ersten Kennlinienabschnitt mit vergleichsweise wenig Leistungseinbuße ein Ausgleich für die Drehzahlerhöhung im zweiten Kennlinienabschnitt geschaffen werden, sodass die Betriebskennlinie insgesamt etwa neutral für die gesamten Schwenklasten ist.

Insbesondere wird vorgeschlagen, dass der zweite Kennlinienabschnitt zu höheren Drehzahlen hin so verändert wird, dass der zweite Drehzahlbereich nach der Anpassung der Betriebskennlinie bis zu einer Maximaldrehzahl reicht, die oberhalb einer Nenndrehzahl liegt. Insoweit kann die Veränderung des zweiten Kennlinienabschnitts auch als Kennlinienerweiterung bezeichnet werden. Der zweite Kennlinienabschnitt wird also hin zu größeren Drehzahlen erweitert.

Hier wird also insbesondere vorgeschlagen, dass die Drehzahl über Nenndrehzahl erhöht wird. Insbesondere kann durch diesen Aspekt erreicht werden, dass überhaupt der Drehzahlbereich, in dem die Windenergieanlage betrieben wird, auf eine Maximaldrehzahl oberhalb der Nenndrehzahl erhöht wird. Zur Einhaltung der Belastungen, insbesondere zur Einhaltung der Schwenklasten bzw. zur Einhaltung von Belastungsgrenzen, die durch die Schwenklasten gegeben sind, kann zum Ausgleich die Drehzahl im ersten Drehzahlbereich verringert werden.

Gemäß einem Aspekt wird vorgeschlagen, dass als Betriebsgröße eine Betriebsleistungsgröße verwendet wird, die repräsentativ für ein Generatormoment, eine Generatorleistung, oder einer Abgabeleistung ist, sodass die Betriebskennlinie einen Zusammenhang zwischen der Rotordrehzahl und der Betriebsleistungsgröße angibt. Das Generatormoment kann synonym für ein Generatordrehmoment stehen.

Die Verwendung von Generatorleistung oder Abgabeleistung als Betriebsgröße oder der Verwendung des Generatordrehmomentes als Betriebsgröße, wurde oben bereits erläutert. Insoweit verdeutlicht dieser Aspekt, dass die Betriebskennlinie einen Zusammenhang zwischen der Rotordrehzahl und der Betriebsleistungsgröße angibt, der also über die Betriebskennlinie der Generator entsprechend eingestellt wird, um dadurch die Leistung zu beeinflussen. Das kann dann entsprechend durch das Generatormoment, die Generatorleistung oder eine Abgabeleistung erfolgen. Somit wird also die Betriebskennlinie hinsichtlich dieser Betriebsleistungsgröße verändert, um dadurch die Leistungsausbeute zu erhöhen.

Gemäß einem Aspekt wird vorgeschlagen, dass der erste Kennlinienabschnitt vollständig in einem Teillastbereich liegt, in dem die Windgeschwindigkeit unter einer Nennwindgeschwindigkeit liegt, und/oder die Rotordrehzahl unter einer Rotornenndrehzahl liegt. Gemäß diesem Aspekt wird vorgeschlagen, dass der zweite Kennlinienabschnitt zumindest teilweise in einem Volllastbereich liegt, in dem die Windgeschwindigkeit Nennwindgeschwindigkeit erreicht und insbesondere auch darüber liegt, und in dem die Rotordrehzahl durch Verstellen der Rotorblätter in ihrem Blattwinkel begrenzt wird, wobei insbesondere der zweite Kennlinienabschnitt einen Übergangsbereich vom Teillastbereich zum Volllastbereich umfasst, also in diesem Übergangsbereich liegt.

Der zweite Kennlinienabschnitt liegt somit bei vergleichsweise hohen Drehzahlen und geht bis in den Volllastbereich hinein. Hier wurde erkannt, dass besonders im Übergang zu diesem Volllastbereich noch eine Erhöhung der Leistungsausbeute möglich ist. Zu Beginn des Volllastbereichs werden üblicherweise die Rotorblätter aus dem Wind gedreht, um zum Anlagenschutz nicht mehr die vollständig verfügbare Leistung aus dem Wind zu entnehmen. Am Anfang des Volllastbereichs, also bei Windgeschwindigkeiten, die erst etwas über Nennwindgeschwindigkeit liegen, ist die Belastung der Rotorblätter zwar sehr groß, aber ansonsten ist eine Belastung noch nicht sehr groß und eine Drehzahlerhöhung zusammen mit einer Leistungserhöhung kommt bei Berücksichtigung der auftretenden Lasten grundsätzlich in Betracht. Wird hierzu, wie vorgeschlagen wird, auch die Drehzahl noch etwas erhöht, erhöhen sich zwangsläufig die Schwenklasten, was aber durch die geringere Drehzahl im ersten Kennlinienabschnitt ausgeglichen werden kann. Damit wird es möglich in diesem Übergangsbereich vom Teillastbereich zum Volllastbereich von der dort verfügbaren Windleistung noch etwas mehr in elektrische Leistung umzusetzen als vor der Anpassung der Betriebskennlinie.

Gemäß einem Aspekt wird vorgeschlagen, dass die Betriebskennlinie so angepasst wird, dass die Rotordrehzahl in dem zweiten Kennlinienabschnitt zumindest teilweise über die Rotornenndrehzahl, also über die Nenndrehzahl, auf eine Maximaldrehzahl erhöht wird. Die Windenergieanlage wird also mit einer höheren Drehzahl als Nenndrehzahl betrieben. Dadurch kann, wie bereits erläutert wurde, eine Erhöhung der Leistungsausbeute erreicht werden.

Dazu wird vorgeschlagen, dass die Rotordrehzahl für Windgeschwindigkeiten oberhalb einer erhöhten Windgeschwindigkeit, die oberhalb einer Nennwindgeschwindigkeit liegt und eine höchste Windgeschwindigkeit des zweiten Kennlinienabschnitts kennzeichnet, und für Windgeschwindigkeiten unterhalb einer Sturmwindgeschwindigkeit ab der die Rotordrehzahl und Rotornenndrehzahl reduziert wird, auf eine Rotordrehzahl unterhalb der Maximaldrehzahl verringert wird, insbesondere auf Rotornenndrehzahl. Es wird also vorgeschlagen, dass die Rotordrehzahl über die Rotornenndrehzahl auf die Maximaldrehzahl erhöht wird, aber nur für den zweiten Kennlinienabschnitt. Nach diesem zweiten Kennlinienabschnitt, also für Windgeschwindigkeiten, die nicht mehr diesen zweiten Kennlinienabschnitt zugeordnet werden, wird die Drehzahl wieder abgesenkt, nämlich besonders auf Nenndrehzahl. Die Nenndrehzahl wird dann bis zur Sturmwindgeschwindigkeit beibehalten.

Dadurch wird im Grunde erreicht, dass zu Beginn des Volllastbereichs die Anlage mit einer erhöhten Drehzahl betrieben wird. Dadurch kann bei vergleichsweise geringer Belastungserhöhung der Windenergieanlage eine Erhöhung der Leistungsausbeute erreicht werden. Besonders wird diese maximale Drehzahl für Windgeschwindigkeiten ab Nennwindgeschwindigkeit bis zur erhöhten Windgeschwindigkeit vorgeschlagen, die die höchste Windgeschwindigkeit des zweiten Kennlinienabschnitts kennzeichnet, die also bezogen auf die Windgeschwindigkeit das Ende des zweiten Kennlinienabschnitts kennzeichnet.

Gemäß einem Aspekt wird vorgeschlagen, dass die Windenergieanlage an einem Aufstellort aufgestellt ist, der durch eine Höhenlage gekennzeichnet ist, die die Höhe des Aufstellortes angibt, und die Anpassung des zweiten Kennlinienabschnitts in Abhängigkeit von der Höhenlage des Aufstellortes und/oder in Abhängigkeit von einem mittleren Luftdruck an dem Aufstellort vorgenommen wird.

Hier wurde besonders erkannt, dass Aufstellorte an Höhenlagen, also insbesondere in Gebirgen, eine höhere Gefahr von Strömungsabrissen birgt. Diese kann durch eine Erhöhung der Rotordrehzahl verringert werden. Eine unmittelbare Belastung durch den Wind reduziert sich durch die geringere Luftdichte. Eine Belastung durch die Schwenklasten wird durch den Luftdruck aber nicht verringert, sondern durch die erhöhte Drehzahl erhöht, weil die Anzahl an Lastwechseln zunimmt. Es wurde aber erkannt, dass ein Ausgleich durch Reduzierung der Drehzahl in einem anderen Bereich geschaffen werden kann.

Insbesondere wird vorgeschlagen, dass Werte der Betriebsgröße im zweiten Kennlinienabschnitt umso stärker zu höheren Drehzahlen hin verändert werden, je größer die Höhenlage und/oder je geringer der Luftdruck sind, und insbesondere die Maximaldrehzahl umso größer gewählt wird, je größer die Höhenlage und/oder je geringer der Luftdruck sind. Durch diese Berücksichtigung von Höhenlage und/oder Luftdruck kann somit eine Erhöhung der Leistungsausbeute durch Erhöhung der Drehzahl gut umgesetzt werden. Eine Erhöhung der Belastung durch Erhöhung der Schwenklasten kann ausgeglichen werden.

Gemäß einem Aspekt wird vorgeschlagen, dass als Windcharakteristik ein Windfeld und/oder eine zeitliche und/oder örtliche Windgeschwindigkeitsverteilung im Bereich der Windenergieanlage aufgenommen wird und die Erhöhung der Rotordrehzahl im zweiten Kennlinienabschnitt in Abhängigkeit von der Windcharakteristik vorgenommen wird, wobei die Rotordrehzahl im zweiten Kennlinienabschnitt umso stärker erhöht wird, je größer die örtliche und/oder zeitliche Variation der Windgeschwindigkeit und/oder je größer eine erfasste Böigkeit ist.

Hier wurde besonders erkannt, dass eine örtliche und/oder zeitliche Variation der Windgeschwindigkeit und/oder eine große Böigkeit auch zu zeitlich und/oder örtlich kurzfristig hohen Windgeschwindigkeiten führen kann, was die Gefahr eines Strömungsabrisses birgt. Dem kann durch eine Erhöhung der Rotordrehzahl entgegengewirkt werden. Dadurch wird vorgeschlagen, dass die Betriebskennlinie in Abhängigkeit von der Windcharakteristik angepasst wird. Insbesondere wird der zweite Kennlinienabschnitt entsprechend angepasst, die Rotordrehzahl dort also erhöht. Gleichzeitig wird hierzu aber zum Ausgleich eine Verringerung der Rotordrehzahl im Bereich des ersten Kennlinienabschnitts vorgeschlagen.

Gemäß einem Aspekt wird vorgeschlagen, dass an der Windenergieanlage wenigstens eine Erfassungsvorrichtung, zum Erfassen einer Windcharakteristik vorgesehen ist, insbesondere wenigstens ein Messgerät, und mittels der Erfassungsvorrichtung wenigstens eine Windeigenschaft erfasst wird, nämlich wenigstens eine Windscherung, eine Windturbulenz und/oder eine örtliche Windgeschwindigkeitsverteilung, wobei die Betriebskennlinie in Abhängigkeit von der erfassten Windeigenschaft angepasst wird.

Eine weitere Verbesserung der schwenklastoptimierten Betriebsführung kann dadurch erreicht werden. Es wird daher vorgeschlagen, die Anlagen mit geeigneten Messgeräten auszustatten, die mindestens die Windgeschwindigkeit, besser jedoch auch Scherung und Turbulenz, erfassen können, um eine exakte Windgeschwindigkeitsverteilung ermitteln zu können. Je genauer die Windgeschwindigkeitsverteilung am Standort bekannt ist, desto genauer kann die Betriebsführung feinjustiert werden, um den Ertragsgewinn zu maximieren. Durch eine solche Erfassungsvorrichtung können z.B. auch Nachlaufeffekte gut erkannt werden. Stellt man dadurch beispielsweise fest, dass aufgrund von Nachlaufeffekten die Windgeschwindigkeitsverteilung sich zu kleineren Windgeschwindigkeiten verschiebt, kann ein weiteres Anheben der Maximaldrehzahl über die Nenndrehzahl durchgeführt werden.

Gemäß einem Aspekt wird vorgeschlagen, die Betriebskennlinie in Abhängigkeit von einer Azimutausrichtung anzupassen, insbesondere, dass die Erhöhung der Rotordrehzahl im zweiten Kennlinienabschnitt in Abhängigkeit von einer Azimutausrichtung der Windenergieanlage durchgeführt wird. Hier wurde erkannt, dass die Windcharakteristik an einem Aufstellungsort in unterschiedlichen Windrichtungen, und damit in Abhängigkeit der Azimutausrichtung, generell unterschiedlich sein können. Z.B. kann die Windgeschwindigkeit je nach Windrichtung also Azimutausrichtung unterschiedlich stark variieren. Durch schnell ansteigende Windgeschwindigkeiten können Strömungsabrisse auftreten, die somit besonders bei stark variierender Windgeschwindigkeit zu befürchten sind. Damit sind solche Strömungsabrisse in entsprechenden Windrichtungen bzw. zu entsprechenden Azimutausrichtungen zu befürchten, sind dort zumindest wahrscheinlicher. Zu solchen Azimutausrichtungen, kann eine Drehzahlerhöhung ein solches Risiko eines Strömungsabrisses verringern. Das ist dann aber nur für entsprechende Azimutausrichtungen vorzusehen.

Somit wird besonders vorgeschlagen, dass die Rotordrehzahl im zweiten Kennlinienabschnitt umso stärker erhöht wird, je turbulenter eine durchschnittliche Windcharakteristik für eine jeweilige Azimutausrichtung ist. Auch hier liegt der Gedanke zugrunde, dass eine turbulente durchschnittliche Windcharakteristik auch Bereiche hoher Windgeschwindigkeit aufweist, die dann zu einem Strömungsabriss führen können. Durch eine erhöhte Drehzahl kann das vermieden werden.

Außerdem oder alternativ wird vorgeschlagen, dass die Erhöhung der Rotordrehzahl im zweiten Kennlinienabschnitt für eine Azimutausrichtung größer ist, bei der sich die Windenergieanlage in einem Nachlaufbereich einer weiteren Windenergieanlage befindet, als für eine Azimutausrichtung, bei der sich die Windenergieanlage nicht in einem Nachlauf einer weiteren Windenergieanlage befindet. Auch hier wurde erkannt, dass in einem Nachlauf einer Windenergieanlage Turbulenzen auftreten und zu kurzfristigen höheren Windgeschwindigkeiten führen können und damit zu einem Strömungsabriss führen können.

Insbesondere wurde erkannt, dass all dies für unterschiedliche Azimutausrichtungen unterschiedlich sein kann. Daraus wurde der Vorschlag abgeleitet, für unterschiedliche Azimutausrichtungen unterschiedliche Betriebskennlinien zu verwenden. Es wird also vorgeschlagen, dass die Betriebskennlinie in Abhängigkeit von einer Azimutausrichtung angepasst wird.

Gemäß einem Aspekt wird vorgeschlagen, dass die Erhöhung der Rotordrehzahl im zweiten Kennlinienabschnitt bezogen auf die Nenndrehzahl im Bereich von 2 % - 10 % liegt, insbesondere im Bereich von etwa 3 % - 8 % liegt. Hier liegt besonders der Gedanke zugrunde, dass zu einem Betriebspunkt, der einer Windgeschwindigkeit zugeordnet werden kann, eine Rotordrehzahl gemäß Kennlinie vorliegt bzw. sich einstellt und diese Rotordrehzahl wird im zweiten Kennlinienabschnitt um die genannten Werte erhöht. Insbesondere bzw. alternativ bedeutet das auch, dass der zweite Kennlinienzweig um 2 % - 10 %, insbesondere im Bereich von 3 % - 8 % zu einer höheren Drehzahl hin verändert, insbesondere verschoben wird.

Eine gleichmäßige Verschiebung bedeutet, dass die Rotordrehzahl generell um diesen Prozentbereich erhöht wird. Vorzugsweise kann die Erhöhung auch in diesem Bereich variieren. Insbesondere wird auch vorgeschlagen, dass der zweite Kennlinienabschnitt zu höheren Drehzahlen hin um den genannten Bereich verändert bzw. erweitert wird. Davon ausgehend, dass der zweite Kennlinienabschnitt vor der Anpassung bis zur Nenndrehzahl reicht, reicht er nach der Anpassung zu einer maximalen Drehzahl, die um 2 % - 10 %, insbesondere um 3 % - 8 % über der Nenndrehzahl liegt.

Erfindungsgemäß wird auch ein Verfahren zum Steuern einer Windenergieanlage vorgeschlagen, wobei die Windenergieanlage einen Rotor mit in ihrem Blattwinkel verstellbaren Rotorblättern aufweist, der Rotor mit variabler Rotordrehzahl betreibbar ist, und zum Steuern der Windenergieanlage eine angepasste Betriebskennlinie verwendet wird, die einen Zusammenhang zwischen der Rotordrehzahl und wenigstens einerweiteren Betriebsgröße beschreibt. Die angepasste Betriebskennlinie weist einen ersten Kennlinienabschnitt mit einem ersten Drehzahlbereich, und einen zweiten Kennlinienabschnitt mit einem zweiten Drehzahlbereich auf. Der erste Drehzahlbereich weist kleinere Drehzahlen auf, als der zweite Drehzahlbereich, und die angepasste Betriebskennlinie ist so ausgebildet, dass die Betriebsgröße des ersten Kennlinienabschnitts gegenüber einer als optimal ermittelten Betriebskennlinie erhöhte Werte aufweist. Dazu ist die Betriebsgröße im zweiten Kennlinienabschnitt gegenüber einer als optimal ermittelten Betriebskennlinie zu höheren Drehzahlen hin verändert, insbesondere erweitert. Dabei sind der erste und zweite Kennlinienabschnitt der angepassten Betriebskennlinie so aufeinander abgestimmt, dass eine erwartete Gesamtanzahl Drehungen des Rotors über eine vorgegebene Laufzeit der Windenergieanlage eine für die als optimal ermittelten Betriebskennlinie vorgegebene Gesamtanzahl nicht überschreitet.

Die Windenergieanlage wird also mit einer angepassten Betriebskennlinie gesteuert. Die Betriebskennlinie ist insoweit gegenüber einer als optimal ermittelten Betriebskennlinie angepasst. Eine als optimal ermittelte Betriebskennlinie ist eine, bei der ein maximaler Leistungsbeiwert zugrunde gelegt wird. Die optimale Betriebskennlinie ist also so eingestellt, bzw. wird so vorgegeben, dass im Teillastbetrieb, unter Einhaltung von Belastungsgrenzen, maximale Leistung aus dem Wind entnommen werden kann. Das Einhalten von Belastungsgrenzen ist dabei meist nur oder im Wesentlichen im Übergang zum Volllastbereich relevant. Besonders führt das dazu, dass optimale Betriebskennlinien eine Nenndrehzahl der Windenergieanlage, also eine Nennrotordrehzahl, als maximale Rotordrehzahl zugrunde legen.

Durch die angepasste Betriebskennlinie wird davon nun abgewichen. Im zweiten Kennlinienabschnitt wird im Vergleich dazu die Rotordrehzahl erhöht.

Im ersten Kennlinienabschnitt wird zum Ausgleich die Betriebsgröße gegenüber der als optimal ermittelten Betriebskennlinie erhöht. Für gleiche Werte der Rotordrehzahl weist die Betriebsgröße also höhere Werte auf. Das führt dazu, wie oben schon erläutert wurde, dass bei gleichen Windgeschwindigkeiten im ersten Kennlinienabschnitt geringere Drehzahlwerte auftreten.

Besonders wird also eine Drehzahlerhöhung im oberen Bereich der Betriebskennlinie erreicht, also bei großen Rotordrehzahlen, insbesondere auch zum Übergangsbereich zum Volllastbereich hin. Hier werden die Rotordrehzahlen stärker zu einer Belastungsgrenze hin erhöht. Das ist besonders durch Berücksichtigung aktueller und individueller Belastungsgegebenheiten der konkreten Windenergieanlage an dem konkreten Aufstellungsort möglich.

Zum Ausgleich wird die Rotordrehzahl im unteren Bereich der Betriebskennlinie verringert, wodurch die Windenergieanlage dort dann nicht mehr im optimalen Betriebspunkt betrieben wird. Es stellt sich eine Leistungseinbuße ein, es wurde aber erkannt, dass diese vergleichsweise gering ist, denn der Leistungsbeiwert verändert sich mit der Drehzahl und damit Veränderung der Schnelllaufzahl nur sehr wenig, solange die Änderungen der Drehzahl und somit der Änderungen der Schnelllaufzahl nicht zu stark sind. Es wurde nämlich erkannt, dass der Leistungsbeiwert bei der optimalen Betriebskennlinie maximal gewählt wird. Eine Kennlinie, die den Leistungsbeiwert in Abhängigkeit von der Schnelllaufzahl zeigt, hat also bei der für die optimale Betriebskennlinie gewählten Schnelllaufzahl einen Maximalpunkt. Das bedeutet aber auch, dass sie in dem Bereich die Ableitung Null aufweist, also anschaulich gesprochen ein Plateau hat. Wird die Schnelllaufzahl verändert, verändert sich der zugehörige Punkt in dieser Kennlinie aufgrund der anfänglichen Steigung von null nur wenig.

Diese Erkenntnis wird hier ausgenutzt. Bei hohen Drehzahlen, wo bei der Betriebskennlinie auch die Beachtung von Belastungsgrenzen eine Rolle spielt, können Erhöhungen der Drehzahl zu einer starken Leistungserhöhung führen. Die erhöhten Schwenklasten können durch eine Verringerung der Rotordrehzahl in einem Bereich ausgeglichen werden, in dem die Verringerung der Drehzahl aber nur zu einer sehr geringen Leistungsverringerung führt.

Gemäß einem Aspekt wird vorgeschlagen, dass die als optimal ermittelte Betriebskennlinie so ausgelegt ist, dass die Windenergieanlage im ersten Drehzahlbereich mit einer optimalen Schnelllaufzahl betrieben wird, bei der ein maximaler Leistungsbeiwert (Cp-Wert) erreicht wird, und dass bei der angepassten Betriebskennlinie die Windenergieanlage im ersten Drehzahlbereich nicht mit der optimalen Schnelllaufzahl betrieben wird. Es wird also ausdrücklich vorgeschlagen, dass bei der optimalen Betriebskennlinie eine optimale Schnelllaufzahl, also ein maximaler Leistungsbeiwert zugrunde gelegt wird, und dass dieser optimale Betrieb bei der angepassten Betriebskennlinie ausdrücklich im ersten Drehzahlbereich verlassen wird.

Dazu ist zu bemerken, dass es für den Fachmann eine übliche Herangehensweise ist, die Betriebskennlinie für eine optimale Schnelllaufzahl auszulegen. Das bedeutet, dass einer Drehzahl jeweils eine solche Betriebsgröße, insbesondere Betriebsleistungsgröße zugeordnet wird, und dass sich bei der betreffenden Windgeschwindigkeit eine optimale Schnelllaufzahl, also eine Schnelllaufzahl mit maximalem Leistungsbeiwert einstellt.

Der maximale Leistungsbeiwert, bzw. überhaupt der Leistungsbeiwert, hängt auch von dem Blattanstellwinkel ab. Im Teillastbereich ist dieser aber häufig auf einen konstanten Wert gesetzt. Dieser Blattwinkel kann bei der Betriebskennlinie, zumindest im ersten Kennlinienabschnitt, also im ersten Drehzahlbereich, sowohl bei der optimalen Betriebskennlinie als auch bei der angepassten Betriebskennlinie jeweils den gleichen und insbesondere konstanten Wert annehmen. Mit anderen Worten wird bei der Veränderung der Betriebskennlinien vorzugsweise der Blattwinkel bei der angepassten Betriebskennlinie gegenüber der optimalen Betriebskennlinie nicht verändert. Auch bei der beschriebenen Anpassung der Betriebskennlinie wird der Blattwinkel im Teillastbereich vorzugsweise nicht verändert.

Gemäß einem Aspekt wird vorgeschlagen, dass wenigstens eine weitere Betriebskennlinie vorgesehen ist, die sich von der angepassten Betriebskennlinie unterscheidet, und die angepasste Betriebskennlinie und die wenigstens eine weitere Betriebskennlinie für unterschiedliche Azimutausrichtungen der Windenergieanlage verwendet werden. Außerdem, oder alternativ wird vorgeschlagen, dass Windcharakteristika im Bereich der Windenenergieanlage erfasst werden und die angepasste Betriebskennlinie und die wenigstens eine weitere Betriebskennlinie für unterschiedliche Windcharakteristika verwendet werden.

Weiterhin wird außerdem oder alternativ vorgeschlagen, dass die Rotordrehzahl im zweiten Kennlinienabschnitt für eine Azimutausrichtung größer ist, bei der sich die Windenergie in einem Nachlaufbereich einer weiteren Windenergieanlage befindet, als für eine Azimutausrichtung, bei der sich die Windenergieanlage nicht in einem Nachlauf einer weiteren Windenergieanlage befindet, wobei insbesondere die angepasste Betriebskennlinie für die Azimutausrichtung vorgesehen ist, bei der sich die Windenergieanlage im Nachlauf der weiteren Windenergieanlage befindet.

Somit ist also eine weitere Betriebskennlinie vorgesehen, die somit selbst auch eine angepasste Betriebskennlinie ist und sich von der optimalen Betriebskennlinie unterscheidet. Die weitere Betriebskennlinie oder auch diverse weitere Betriebskennlinien, kann für unterschiedliche Bedingungen entworfen werden und dann entsprechend eingesetzt werden. Dazu wird besonders vorgeschlagen, unterschiedliche Betriebskennlinien für unterschiedliche Azimutausrichtungen zu verwenden.

Aus Messungen, die im Betrieb der Windenergieanlage aufgenommen wurden, oder aus einer Vermessung des Aufstellungsortes der Windenergieanlage können Unterschiede für unterschiedliche Azimutausrichtungen bekannt sein. Das wird ausgenutzt und dafür vorgeschlagen, unterschiedlichen Azimutausrichtungen unterschiedliche Betriebskennlinien zuzuordnen. Besonders wurde auch erkannt, dass eine Azimutausrichtung leicht erkannt werden kann, da sie ohnehin eine Größe der Betriebsführung der Windenergieanlage ist und dadurch leicht eine entsprechende Betriebskennlinie, nämlich die angepasste Betriebskennlinie oder wenigstens eine weitere Betriebskennlinie, ausgewählt werden können.

Die Bedeutung der unterschiedlichen Windbedingungen, die für unterschiedliche Azimutausrichtungen auftreten können, wurden oben bereits im Zusammenhang mit der Anpassung der Betriebskennlinie beschrieben. Diese Erkenntnisse kommen auch hier zur Anwendung für die Frage, welche Rotordrehzahl jeweils für welche Windsituationen sinnvoll ist.

Es kommt auch in Betracht, dass zusätzlich oder alternativ, Windcharakteristika im Bereich der Windenergieanlage erfasst werden. Dann kann in Abhängigkeit von den erfassten Betriebscharakteristika die angepasste Betriebskennlinie oder wenigstens eine weitere Betriebskennlinie ausgewählt werden. Bei der Auswahl können die Windcharakteristika besonders durch einen Wert gekennzeichnet werden, wie beispielsweise eine Böigkeit. Beispielsweise kann eine Böigkeit in einem Bereich von 0 - 1 gekennzeichnet werden, wobei 0 bedeutet, dass gar keine Böen auftreten, und der Wert 1, dass eine maximale Böigkeit vorliegt. Es sind natürlich auch andere charakteristische Werte und/oder Windcharakteristika möglich. Die Bedeutung unterschiedlicher Windcharakteristika wurde oben bereits erläutert.

Insbesondere wird vorgeschlagen, dass die angepasste Betriebskennlinie und soweit vorhanden die wenigstens eine weitere Betriebskennlinie jeweils durch ein Verfahren zum Anpassen einer Betriebskennlinie gemäß wenigstens einer dazu vorstehend erläuterten Ausführungsformen bzw. gemäß einem dazu vorstehend erläuterten Aspekt angepasst wurde. Die Vorteile, die zum Anpassen einer Betriebskennlinie beschrieben wurden, können somit in vorteilhafter Weise für die Steuerung der Windenergieanlage verwendet werden. Die Windenergieanlage wird dann also nicht mehr mit der bisher verwendeten optimalen Betriebskennlinie gesteuert, sondern mit der angepassten Betriebskennlinie gegebenenfalls situationsabhängig mit einer weiteren Betriebskennlinie.

Erfindungsgemäß wird auch eine Windenergieanlage vorgeschlagen, die einen Rotor mit in Ihrem Blattwinkel verstellbaren Rotorblättern und eine Anlagensteuerung zum Steuern der Windenergieanlage aufweist, wobei der Rotor mit variabler Rotordrehzahl betreibbar ist, und zum Steuern der Windenergieanlage eine Betriebskennlinie verwendet wird, die einen Zusammenhang zwischen der Rotordrehzahl und wenigstens einer Betriebsgröße beschreibt. Es wird vorgeschlagen, dass die Betriebskennlinie in der Anlagensteuerung implementiert ist, und einen ersten Kennlinienabschnitt mit einem ersten Drehzahlbereich, und einen zweiten Kennlinienabschnitt mit einem zweiten Drehzahlbereich aufweist. Dabei ist die Betriebskennlinie gegenüber einer bisherigen Betriebskennlinie so angepasst, dass Werte der Betriebsgröße des ersten Kennlinienabschnitts erhöht wurden, und Werte der Betriebsgröße des zweiten Kennlinienabschnitts zu höheren Drehzahlen hin verändert wurden, und dass die Anpassung der Betriebskennlinie so erfolgt ist, dass eine erwartete Gesamtanzahl Drehungen des Rotors über eine vorgegebene Laufzeit der Windenergieanlage etwa gleich geblieben ist.

Insbesondere wird vorgeschlagen, dass die Betriebskennlinie einer solchen Windenergieanlage gegenüber der bisherigen Betriebskennlinie gemäß einem Verfahren nach einem der vorstehend beschriebenen Ausführungsformen bzw. Aspekte zum Anpassen einer Betriebskennlinie angepasst wurde. Somit wird eine Windenergieanlage vorgeschlagen, die eine angepasste und damit verbesserte Betriebskennlinie aufweist, um eine Leistungsausbeute noch zu erhöhen.

Gemäß einem Aspekt wird auch eine Windenergieanlage vorgeschlagen, die mit einem Verfahren gemäß einer der vorstehend beschriebenen Ausführungsformen bzw. Aspekte gesteuert wird, die das Steuern einer Windenergieanlage betreffen. Optional ist die Windenergieanlage so ausgebildet, wie vorstehend zu einer Windenergieanlage gemäß wenigstens einer Ausführungsform und einem Aspekt beschrieben wurde.

Nachfolgend wird die Erfindung exemplarisch anhand von Ausführungsformen unter Bezugnahme auf die begleitenden Figuren näher erläutert.
Figur 1 zeigt eine Windenergieanlage in einer perspektivischen Darstellung.
Figur 2 zeigt einen Windpark in einer schematischen Darstellung.
Figur 3 zeigt ein Diagramm in dem mehrere Betriebskennlinien gegenübergestellt werden.
Figur 4 zeigt ein Diagramm, in dem mehrere Verläufe der Schnelllaufzahl in Abhängigkeit von der Windgeschwindigkeit gegenübergestellt werden, die zu den Betriebskennlinien der Figur 3 korrespondieren.

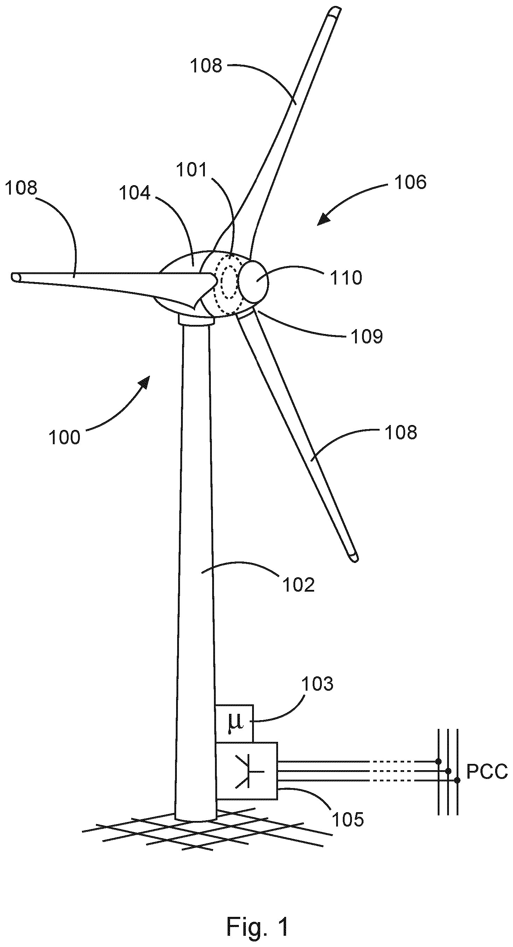

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

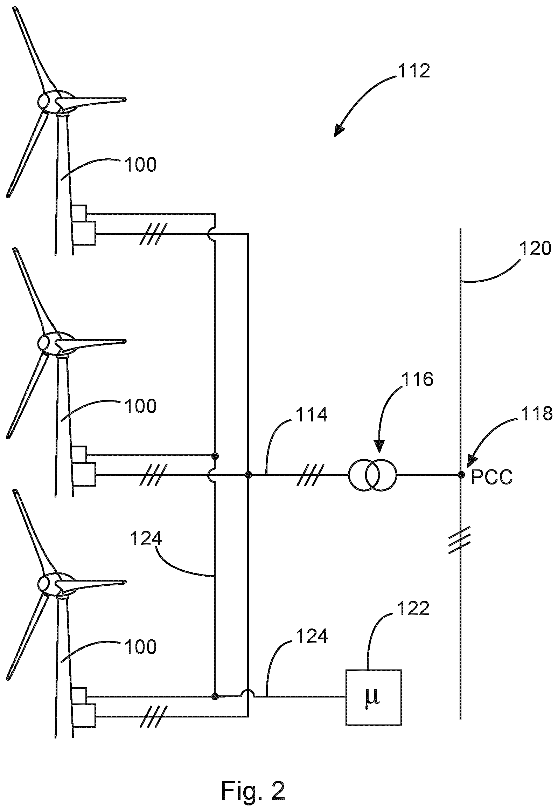

**Figur 2** zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

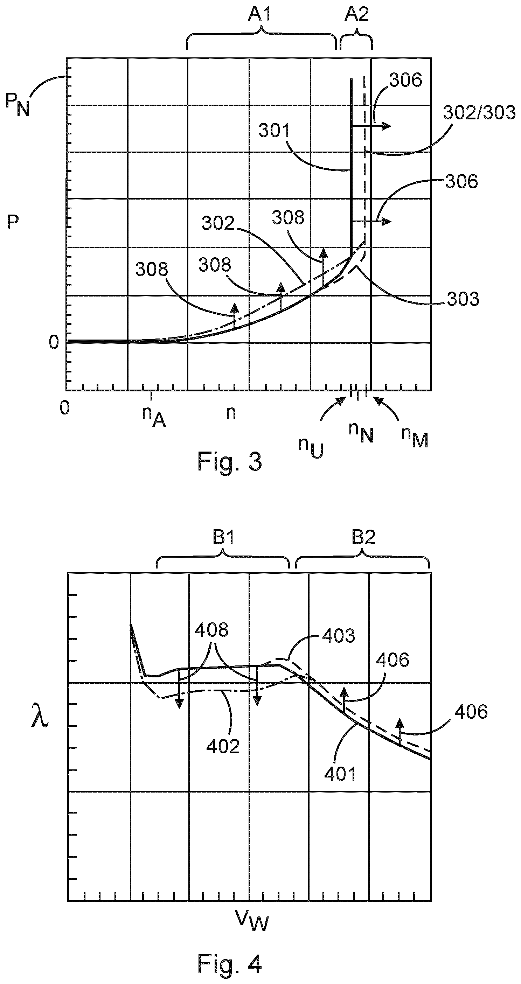

**Figur 3** zeigt ein Diagramm mit drei Betriebskennlinien, die hier gegenübergestellt werden. Die drei Betriebskennlinien geben in diesem Beispiel einen Zusammenhang zwischen der Rotordrehzahl n und der Generatorleistung P an. Die Generatorleistung P ist somit eine Betriebsgröße. Statt der Generatorleistung P können als Betriebsgröße auch eine andere Leistung oder ein Generatordrehmoment verwendet werden. Alle Kennlinien geben somit an, bei welcher Drehzahl welche Generatorleistung einzustellen ist. Das Diagramm reicht somit von 0 Leistung bis Nennleistung P_{N}. Für Rotordrehzahlen reicht es von Drehzahl 0 bis etwas über die Nenndrehzahl n_{N} hinaus. Sämtliche Betriebskennlinien zeigen etwa im Bereich der Nenndrehzahl n_{N} einen senkrechten Verlauf, der kann aber auch eine geringe Steigung haben.

In Figur 3 sind drei Betriebskennlinien dargestellt. Die bisherige Betriebskennlinie 301 ist eine Kennlinie, die besonders für eine neue Windenergieanlage ausgelegt wird. Insbesondere stellt sie eine optimale Betriebskennlinie unter der Annahme zugrunde gelegter Windbedingungen dar.

Außerdem ist eine erfindungsgemäß angepasste Betriebskennlinie 302 dargestellt, die nach Anpassung der bisherigen Betriebskennlinie 301 entsteht.

Weiterhin ist noch eine alternative Betriebskennlinie 303 dargestellt, die nur dem Zwecke der Erläuterung dient und die teilweise mit der angepassten Betriebskennlinie 302 übereinstimmt, nämlich besonders in dem steilen Bereich in der Nähe der Nenndrehzahl n_{N}.

Die bisherige Betriebskennlinie 301 weist, wie alle Betriebskennlinien bei Drehzahl mit dem Wert 0 auch einen Leistungswert von 0 auf. Mit Anlaufdrehzahl n_{A} beginnt etwa der Betrieb der Windenergieanlage derart, dass etwas Leistung erzeugt wird, der Leistungswert also mit steigender Drehzahl also langsam ansteigt. Es ist zu betonen, dass Betriebskennlinien keinen zeitabhängigen Verlauf darstellen, sondern stationäre Betriebszustände wiedergeben. Beim Anlaufen der Anlage ist es üblicherweise so, dass ab Erreichen einer Anlaufwindgeschwindigkeit die Anlage zu drehen beginnt, die Drehzahl sich dann erhöht und dann ab Erreichen der Anlaufdrehzahl n_{A} die Leistung zugeschaltet wird und sich dann erhöht, wenn sich die Windgeschwindigkeit weiter erhöht. Erhöht sich die Windgeschwindigkeit aber nicht weiter, kann der Betrieb der Windenergieanlage auch mit Drehzahl nur kurz oberhalb der Anschaltdrehzahl n_{A} mit geringer Leistung P fortgesetzt werden.

Jedenfalls bewegt sich ein Betriebspunkt der Windenergieanlage, der also durch Drehzahl und Leistung gekennzeichnet ist, entlang der Kennlinie, hier also zunächst der bisherigen Betriebskennlinie 301, wenn sich die Windgeschwindigkeit weiter erhöht. Je nach Windgeschwindigkeit kann aber auch ein beliebiger Betriebspunkt auf dieser Drehzahlleistungskennlinie beibehalten werden.

Etwa bei Nenndrehzahl n_{N} erreicht die bisherige Betriebskennlinie 301 im Wesentlichen ihren maximalen Drehzahlwert, der nämlich der Nenndrehzahl n_{N} entspricht, wobei in Abhängigkeit von der Windgeschwindigkeit die Leistung aber weiterhin variieren kann. Aus reglungstechnischen Gründen, die hier nicht von Relevanz sind, kann dieser fast senkrecht dargestellte Zweig bei der Nenndrehzahl n_{N} schräg sein und muss nicht exakt senkrecht sein.

Zur Anpassung der Betriebskennlinie, also zur Änderung der bisherigen Betriebskennlinie 301 in die angepasste Betriebskennlinie 302 werden ein erster Drehzahlbereich A1 und ein zweiter Drehzahlbereich A2 betrachtet. Der erste Drehzahlbereich A1 reicht von einer Anlaufdrehzahl n_{A} bis zu einer Übergangsdrehzahl n_{U}, und der zweite Drehzahlbereich A2 reicht von der Übergangsdrehzahl n_{U} bis zur Maximaldrehzahl n_{M} oder zumindest bis zur Nenndrehzahl n_{N}. Der Teil, der jeweiligen Betriebskennlinie, der in dem ersten Drehzahlbereich A1 liegt, ist somit ein erster Kennlinienabschnitt, und der Teil der jeweiligen Kennlinie, der in dem zweiten Drehzahlbereich liegt, ist somit ein zweiter Kennlinienabschnitt.

Es wird nun zum Anpassen der Betriebskennlinie vorgeschlagen, dass Werte der Betriebsgröße, hier also Leistungswerte P des zweiten Kennlinienabschnitts zu höheren Drehzahlen hin verändert werden, der zweite Kennlinienabschnitt also zu höheren Drehzahlen hin erweitert wird. Im Grunde wird dabei der zweite Kennlinienabschnitt gemäß Figur 3 nach rechts, also hin zu höheren Drehzahlen verschoben. Das wird durch Drehzahlerhöhungspfeile 306 angedeutet. Der zweite Drehzahlbereich A2 der bisherigen Betriebskennlinie 301 reichte im Wesentlichen nur von einer Drehzahl kurz unter der Nenndrehzahl n_{N} bis zur Nenndrehzahl n_{N}. Dieser zweite Drehzahlbereich A2 wurde nun insoweit erweitert, dass er nun bis zu einer maximalen Drehzahl n_{M} erweitert wird. Die Drehzahl kann nun also bis zu diesem höheren Wert der maximalen Drehzahl n_{M} reichen.

Es ist zu beachten, dass der besseren Übersichtlichkeit halber der zweite Drehzahlbereich sowohl für die bisherige Betriebskennlinie 301 als auch für die angepasste Betriebskennlinie 302 (und später auch die alternative Betriebskennlinie 303) immer gleich als zweiter Drehzahlbereich als A2 bezeichnet wird, obwohl der zweite Drehzahlbereich der angepassten Betriebskennlinie 302 erweitert ist und dabei einen größeren Drehzahlbereich umfasst als für die bisherige Betriebskennlinie 301.

Natürlich ist auch hier zu beachten, dass zwar der zweite Drehzahlbereich A2 recht klein ist, dass aber im zweiten Kennlinienabschnitt der angepassten Betriebskennlinie 302 im zweiten Drehzahlbereich A2 eine große Leistungsspanne vorhanden ist. Je nach Windgeschwindigkeit kann nämlich die Leistung variieren und es können unterschiedliche Leistungswerte vorgesehen sein, bei nur geringer Variation der Drehzahl.

Es ist auch zu berücksichtigen, dass die Betriebskennlinien, also alle drei Betriebskennlinien 301 bis 303, in der praktischen Umsetzung teilweise auch mit Hilfe einer Regelung insbesondere einer Drehzahlreglung realisiert werden können. Besonders in dem sehr steilen Ast des zweiten Kennlinienabschnitts, insbesondere, wenn er senkrecht ist, kann eine Realisierung mittels einer Drehzahlreglung vorgesehen sein. Eine solche Drehzahlreglung regelt die Drehzahl, also die Rotordrehzahl, der Windenergieanlage auf den gezeigten Wert, wobei die Leistung P die Stellgröße ist. Je größer die Windgeschwindigkeit ist, umso größer muss die entnommene Leistung eingestellt werden, um die Drehzahl beizubehalten. Die beim Ausregeln der Drehzahl sich einstellende Generatorleistung entspricht somit der Leistung, die der aktuellen Windgeschwindigkeit zugeordnet ist, ohne dass die Windgeschwindigkeit dazu erfasst zu werden braucht. Es ergibt sich ein Punkt auf der betreffenden Betriebskennlinie. Sofern ein solcher Regler einen integralen Anteil hat, kann sogar ein senkrechter Zweig der Betriebskennlinie realisiert werden. Bei einer reinen P-Reglung sollte der Zweig nicht ganz senkrecht sein, sondern eine hohe Steigung aufweisen.

Die angepasste Betriebskennlinie 302 führt somit in dem zweiten Drehzahlbereich A2 zu einer erhöhten Rotordrehzahl. Damit würde sich die Gesamtanzahl der Umdrehung für die Laufzeit der Windenergieanlage erhöhen. Um das zu kompensieren, wird vorgeschlagen, in dem ersten Drehzahlbereich A1, der für alle drei gezeigten Betriebskennlinien gleich sein kann, die Drehzahl zu verringern. Das erfolgt dadurch, dass die Werte der Betriebsgröße, also die Werte der Generatorleistung P erhöht werden. Das ist durch Leistungserhöhungspfeile 308 angedeutet. Durch die Erhöhung der Leistungswerte gemäß den Leistungserhöhungspfeilen 308 wird somit die bisherige Betriebskennlinie 301 zur angepassten Betriebskennlinie 302 hin verändert und damit angepasst. Diese Erhöhung der Leistungswerte entspricht einer Verringerung der Drehzahl. Dieser erste Kennlinienabschnitt der bisherigen Betriebskennlinie 301 in dem ersten Drehzahlbereich A1 entfaltet die gleiche Wirkung wie eine Veränderung dieses ersten Kennlinienabschnitts nach links, also zu geringeren Rotordrehzahlwerten hin.

Jedenfalls wird dadurch eine angepasste Betriebskennlinie 302 geschaffen, die in dem zweiten Drehzahlbereich A2 eine Erhöhung der Drehzahl erreicht und in dem ersten Drehzahlbereich A1 eine Verringerung der Rotordrehzahl zur Folge hat. Diese Rotordrehzahlerhöhung im zweiten Rotordrehzahlbereich A2 und die Rotordrehzahlverringerung im ersten Drehzahlbereich A1 sind so aufeinander abgestimmt, dass im Ergebnis eine erwartete Gesamtanzahl Drehung des Rotors über die vorgegebene Laufzeit der Windenergieanlage etwa gleichbleibt, also gleich wie bei der bisherigen Betriebskennlinie 301.

Im Grunde kann so vorgegangen werden, dass zur Verbesserung der Leistungsausbeute, insbesondere auch zur Vermeidung von Strömungsabrissen im zweiten Drehzahlbereich A2 eine Drehzahlerhöhung durchgeführt wird. Es ist theoretisch auch möglich, nur diese Drehzahlanpassung durchzuführen und genau das zeigt die alternative Betriebskennlinie 303. Bei der alternativen Betriebskennlinie 303 wird also im Wesentlichen die Rotordrehzahl gegenüber der bisherigen Betriebskennlinie 301 nur erhöht, was aber zu einer höheren Gesamtanzahl Drehung des Rotors über die vorgegebene Laufzeit der Windenergieanlage führt und daher zu einer zu hohen Belastung der Windenergieanlage führt bzw. aufgrund einer solchen erhöhten Belastung unzulässig ist.

Im Grunde wird als Abhilfe vorgeschlagen, gegenüber der Veränderung der alternativen Betriebskennlinie 303 zusätzlich im ersten Drehzahlbereich A1 die bisherige Betriebskennlinie 301 durch Verringerung der Drehzahl zusätzlich anzupassen. Das kann durch die Erhöhung der Werte der Betriebsgröße in dem Bereich erfolgen, wie die Leistungserhöhungspfeile 308 andeuten.

**Figur 4** zeigt drei Kennlinien, die jeweils den Verlauf einer Schnelllaufzahl λ in Abhängigkeit von der Windgeschwindigkeit V_{W} zeigen. In Anlehnung an die Figur 3 zeigt die Figur 4 somit eine bisherige λ-Kennlinie 401, eine angepasste λ-Kennlinie 402 und eine alternative λ-Kennlinie 403.

Figur 4 dient nur der Veranschaulichung und daher sind sowohl für die Schnelllaufzahl λ als auch die Windgeschwindigkeit V_{W} keine Größen dargestellt. Aber natürlich nehmen die Werte für die Windgeschwindigkeit V_{W} nach rechts zu und für die Schnelllaufzahl λ nach oben zu.

Die bisherige λ-Kennlinie 401 ist im Wesentlichen so gewählt, dass sich ein optimaler Leistungskoeffizient ergibt, zumindest im ersten Windgeschwindigkeitsbereich B1. Vorsorglich wird darauf hingewiesen, dass die Schnelllaufzeit definiert ist als der Quotient einer Blattspitzengeschwindigkeit durch die Windgeschwindigkeit. Die Blattspitzengeschwindigkeit ist also die Geschwindigkeit der Blattspitze eines Rotorblattes des Rotors der Windenergieanlage und kann auch als Umlaufgeschwindigkeit bezeichnet werden. Die Schnelllaufzahl λ ist auch deswegen eine wichtige Größe für das aerodynamische Verhalten des Rotors, weil dieser Quotient aus Blattspitzengeschwindigkeit zu Windgeschwindigkeit Einfluss auf den tatsächlichen Anströmwinkel des Rotorblattes hat. Das wiederrum hat Einfluss darauf, ob Strömungsabrisse zu befürchten sind.

Daher kann besonders bei hohen Windgeschwindigkeiten eine hohe Rotordrehzahl und damit eine hohe Schnelllaufzahl wünschenswert sein. Entsprechend wird besonders im zweiten Windgeschwindigkeitsbereich B2 eine Erhöhung der Schnelllaufzahl vorgeschlagen, was in Figur 4 als Schnelllaufzahlerhöhung 406 angedeutet ist. Diese Erhöhung wird sowohl für die angepasste λ-Kennlinie 402 als auch die alternative 403 vorgeschlagen.

Zum Ausgleich wird allerdings für die angepasste λ-Kennlinie 402 eine λ-Verringerung 408 vorgeschlagen. Eine Verringerung der Rotordrehzahl und damit der Schnelllaufzahl im ersten Windgeschwindigkeitsbereich B1, also bei geringen Windgeschwindigkeiten, führt nicht so leicht zu einer Gefahr eines Strömungsabrisses, sodass dieser Ausgleich gut durchgeführt werden kann. Im Übrigen führt diese Verringerung der Rotordrehzahl bzw. der Schnelllaufzahl im ersten Windgeschwindigkeitsbereich B1 auch nur zu einer geringen Verringerung des Leistungsbeiwertes, sodass auch nur eine geringe Leistungseinbuße auftritt, die im Hinblick auf den großen Leistungsgewinn im zweiten Windgeschwindigkeitsbereich B2 hinnehmbar ist.

Im Grunde kann der erste Windgeschwindigkeitsbereich B1 dem ersten Drehzahlbereich A1 zugeordnet werden und der zweite Windgeschwindigkeitsbereich B2 dem zweiten Drehzahlbereich A2. Hier wird auch deutlich, dass beide Windgeschwindigkeitsbereiche B1 und B2 ähnlich groß sein können. Bei Erreichen des zweiten Windgeschwindigkeitsbereichs B2 liegt also schon eine vergleichsweise hohe Rotordrehzahl vor, die sich bei weiter ansteigendem Wind in Bereich des zweiten Windgeschwindigkeitsbereichs B2 nicht mehr oder nicht mehr wesentlich erhöht. Wie erläutert wurde, erhöht sich aber mit steigender Windgeschwindigkeit, auch im zweiten Windgeschwindigkeitsbereich B2 die Generatorleistung P weiter.

Die alternative λ-Kennlinie 403 zeigt im Grunde einen wünschenswerten Verlauf, bei dem die λ-Kennlinie im ersten Windgeschwindigkeitsbereich B1 große Werte erreicht, bei denen ein hoher Leistungsbeiwert vorliegt. Die alternative λ-Kennlinie 403 ist somit im ersten Windgeschwindigkeitsbereich B1 optimal. Im zweiten Windgeschwindigkeitsbereich B2 wird sie zudem angehoben, und kann die Vorteile erreichen, die zu der Drehzahlerhöhung bzw. Erhöhung der Schnelllaufzahl bereits erläutert wurden. Allerdings erhöhen sich die Schwenklasten, was zu einer zu hohen Gesamtbelastung führen kann, insbesondere zu einer unzulässig hohen Belastung durch die Schwenklasten, sodass diese ansonsten vielleicht wünschenswerte alternative λ-Kennlinie 403 nicht möglich ist. Um die beschriebenen Vorteile trotzdem möglichst auszuschöpfen, wird die angepasste λ-Kennlinie 402 vorgeschlagen, die im ersten Geschwindigkeitsbereich B1 abgesenkt ist. Es wurde aber erkannt, dass die Nachteile durch diese Absenkung vergleichsweise gering sind.

Erfindungsgemäß wurde besonders das Folgende erkannt.

Die Anhebung der Nenndrehzahl ist ein probates Mittel, um den Ertrag einer Windenergieanlage zu steigern. Die Anlage erzielt typischerweise bessere aerodynamische Leistungsbeiwerte, da bei höherer Nenndrehzahl die Anlage länger auf der optimalen Schnelllaufzahl betrieben werden kann und auch nach Verlassen der optimalen Schnelllaufzahl der Betrieb der Anlage bei größeren Schnelllaufzahlen stattfindet als im Betrieb bei reduzierten Nenndrehzahlen.

Die Anhebung von Nenndrehzahlen ist aber Limitierungen unterworfen. Eine wichtige Limitierung ist die Einhaltung von maximalen Schallleistungspegeln. Liegt eine solche Vorgabe vor und erreicht die Anlage bereits beim Betrieb mit einer nicht erhöhten Nenndrehzahl diese maximal zulässigen Schallleistungspegel, so ist eine Anhebung einer Nenndrehzahl zur Ertragssteigerung üblicherweise nicht umsetzbar. An vielen Standorten liegen solche regulatorischen Vorgaben, entweder zeitweise oder gänzlich nicht vor.

Eine weitere, sehr wichtige Einschränkung ist in vielen praktischen Fällen der Lastenhaushalt der Anlage, hier insbesondere die Schwenklasten und hier insbesondere die Betriebsschwenklasten. Hier werden vereinfachend die Schwenklasten mit Betriebsschwenklasten gleichgesetzt. Die Betriebsschwenklasten werden in guter Näherung hauptsächlich durch die Anzahl der Umdrehungen in der Betriebslebenszeit der Anlage generiert. Eine Anhebung der Nenndrehzahl würde zwangsläufig zu einer höheren Anzahl von Umdrehungen führen und gegebenenfalls zu einer Überschreitung der zertifizierten Lasten. Ein Ertragsgewinn könnte dann nicht realisiert werden, da die vorgesehene Maßnahme der Nenndrehzahlanhebung aus Lastengründen nicht realisierbar ist.

Die Anhebung der Nenndrehzahl, also die Anhebung der Drehzahl oder einer Maximaldrehzahl über eine bisherige Nenndrehzahl, ist im Besonderen vorteilhaft und erstrebenswert, wenn die Anlage ein Rotorblatt aufweist, welches im Betrieb mit Phänomenen der Strömungsablösung beaufschlagt ist. Die Strömungsablösung kann synonym auch als Strömungsabriss bezeichnet werden. Dies Phänomenen der Strömungsablösung kann zum Beispiel an Standorten auftreten, bei denen die Luftdichte gegenüber der Luftdichte, für deren Betrieb das Rotorblatt entworfen wurde, abgesenkt sind. Dies ist vor allem der Fall für Standorte im Gebirge. An solchen Standorten kann es regelmäßig vorkommen, dass bei Windgeschwindigkeiten vor Erreichen der Nennleistung der Anlage, Strömungsablösung am Rotorblatt auftritt.

In einem solchen Falle ist die Anhebung der Drehzahl, respektive Nenndrehzahl, eine besonders zielführende Maßnahme, da durch die damit verbundene Anhebung der Schnelllaufzahl und dem dadurch induzierten Absenken von Blattanstellwinkeln, Strömungsablösungen entgegengewirkt wird und damit verbundene Leistungsverluste vermieden werden.

Zusammenfassend kann also festgestellt werden, dass Nenndrehzahlanhebungen aerodynamisch vorteilhaft wirken, zu einer effizienteren Leistungsumsetzung am Rotorblatt führen, und somit zu Ertragszuwächsen. Dies gilt sowohl für Rotorblätter, die aerodynamisch sauber, also ohne das Auftreten von Strömungsablösungen, umströmt werden als auch für Rotorblätter, die diesbezüglich kritisch betrieben werden, also in Betriebszuständen mit zeitweisem oder dauerhaftem Auftreten von Strömungsablösungen.

Die Anhebung der Nenndrehzahl, also die Anhebung der Drehzahl über die bisherige Nenndrehzahl, wird jedoch durch erhöhte Betriebsschwenklasten limitiert, sodass nicht das volle Ertragssteigerungspotenzial ausgeschöpft werden kann. Die Aufgabe besteht demzufolge dahingehend, ein Vorgehen zu etablieren, eine Anhebung der Nenndrehzahl, also die Anhebung der Drehzahl über die bisherige Nenndrehzahl, durchführen zu können, ohne Anlagenlasten, im besonderem der Betriebsschwenklasten, zu überschreiten. In anderen Worten besteht die Aufgabe darin, eine schwenklastoptimierte Betriebsführung zu finden.

Grundsätzlich besteht das Vorgehen bei der schwenklastoptimierten Betriebsführung darin, die Anzahl der Umdrehungen in der Lebenszeit der Anlage konstant zu halten. Erhöht man nun die Nenndrehzahl, wie dies im Abschnitt vorher als vorteilhaft beschrieben wurde, muss man, um die Anzahl der Umdrehung konstant zu halten, die Drehzahlen in einem anderen Betriebsbereich der Anlage absenken.

Dies geschieht erfindungsgemäß im Teillastbereich durch Absenkung der Teillastschnelllaufzahl. Natürlich muss dann im Teillastbereich mit Leistungsabfällen gerechnet werden, da anzunehmen ist, dass die Anlage bis dato bei einer optimalen Teillastschnelllaufzahl betrieben wurde. In Summe kann man dann einen Ertragszuwachs erwarten, wenn also der Leistungszuwachs durch Anhebung der Nenndrehzahl größer ist als Leistungsabfall im Teillastbereich.

Werden die Parameter Nenndrehzahl und Teillastschnelllaufzahl sorgfältig gewählt, zum Beispiel unter Zuhilfenahme von numerischen Optimierungswerkzeugen, kann in Summe der gewünschte Ertragszuwachs erzielt werden. Dies gilt insbesondere an Standorten, wo im Bereich vor Erreichen der Nennleistung Strömungsablösung auftritt, z.B. an Standorten mit niedrigerer Luftdichte, da hier der Ertragszuwachs durch Vermeidung der Strömungsablösung, besonders groß ausfallen kann.

Die schwenklastoptimierte Betriebsführung ist entsprechend der Windgeschwindigkeitsverteilung am Standort umzusetzen und damit standortspezifisch. Je besser die Windgeschwindigkeitsverteilung am Standort bekannt ist, desto besser kann die Betriebsführung optimiert werden und damit letztendlich der Ertragsgewinn. Oftmals sind jedoch die Windgeschwindigkeitsverteilungen nur unzureichend bekannt, insbesondere in großen Windparks für Anlagen, die sich häufig im Nachlauf von stromauf befindlichen Anlagen befinden.

Zur weiteren Verbesserung der schwenklastoptimierten Betriebsführung wird daher vorgeschlagen, die Anlagen mit geeigneten Messgeräten auszustatten, die mindestens die Windgeschwindigkeit, besser jedoch auch Scherung und Turbulenz, erfassen können, um eine exakte Windgeschwindigkeitsverteilung ermitteln zu können. Je genauer die Windgeschwindigkeitsverteilung am Standort bekannt ist, desto genauer kann die Betriebsführung feinjustiert werden, um den Ertragsgewinn zu maximieren. Stellt man beispielsweise fest, dass aufgrund von Nachlaufeffekten die Windgeschwindigkeitsverteilung sich zu kleineren Windgeschwindigkeiten verschiebt, könnte ein weiteres Anheben der Nenndrehzahl in Betracht gezogen werden.

## Patentansprüche

1. Verfahren zum Anpassen einer Betriebskennlinie (302) einer Windenergieanlage (100), wobei
- die Windenergieanlage (100) einen Rotor (106) mit in ihrem Blattwinkel verstellbaren Rotorblättern (108) aufweist,
- der Rotor (106) mit variabler Rotordrehzahl (n) betreibbar ist,
- zum Steuern der Windenergieanlage (100) eine Betriebskennlinie (302) verwendet wird, die einen Zusammenhang zwischen der Rotordrehzahl (n) und wenigstens einer Betriebsgröße (P) beschreibt, wobei
- die Betriebskennlinie (302)
- einen ersten Kennlinienabschnitt mit einem ersten Drehzahlbereich (A1), und
- einen zweiten Kennlinienabschnitt mit einem zweiten Drehzahlbereich (A2) aufweist, wobei
- der erste Drehzahlbereich (A1) kleinere Drehzahlen (n) aufweist, als der zweite Drehzahlbereich (A2), und
- die Betriebskennlinie (302) so angepasst wird, dass
- Werte der Betriebsgröße (P) des ersten Kennlinienabschnitts erhöht werden, und
- Werte der Betriebsgröße (P) des zweiten Kennlinienabschnitts zu höheren Drehzahlen hin verändert werden, und **dadurch gekennzeichnet, dass**
- die Anpassung der Betriebskennlinie (302) so erfolgt, dass
die Windenergieanlage im zweiten Kennlinienabschnitt mit höherer Drehzahl und im ersten Kennlinienabschnitt mit niedrigerer Drehzahl läuft, sodass
eine erwartete Gesamtanzahl Drehungen des Rotors (106) über eine vorgegebene Laufzeit der Windenergieanlage (100) etwa gleich bleibt.

2. Verfahren nach Anspruch 1, **dadurch gekennzeichnet, dass**
- der erste Drehzahlbereich (A1) oberhalb einer Einschaltdrehzahl (n_{A}) bis zu einer Übergangsdrehzahl (n_{U}) liegt, wobei die Übergangsdrehzahl im Bereich von 80% bis 100% einer Nenndrehzahl liegt, und
- der zweite Drehzahlbereich (A2) bei und oberhalb der Übergangsdrehzahl (n_{U}) liegt, wobei insbesondere
- der zweite Kennlinienabschnitt zu höheren Drehzahlen hin so verändert wird, dass der zweite Drehzahlbereich (A2) nach der Anpassung der Betriebskennlinie (302) bis zu einer Maximaldrehzahl (n_{M}) reicht, die oberhalb einer Nenndrehzahl (n_{N}) liegt.

3. Verfahren nach Anspruch 1 oder 2, **dadurch gekennzeichnet, dass**
- als Betriebsgröße (P) eine Betriebsleistungsgröße (P) verwendet wird, die repräsentativ für ein Generatormoment, eine Generatorleistung (P) oder eine Abgabeleistung ist, sodass die Betriebskennlinie (302) einen Zusammenhang zwischen der Rotordrehzahl (n) und der Betriebsleistungsgröße (P) angibt.

4. Verfahren nach einem der vorstehenden Ansprüche, **dadurch gekennzeichnet, dass**
- der erste Kennlinienabschnitt vollständig in einem Teillastbereich liegt, in dem die Windgeschwindigkeit unter einer Nennwindgeschwindigkeit liegt, und/oder die Rotordrehzahl (n) unter einer Rotornenndrehzahl (n_{N}) liegt, und
- der zweite Kennlinienabschnitt zumindest teilweise in einem Volllastbereich liegt, in dem die Windgeschwindigkeit Nennwindgeschwindigkeit erreicht und insbesondere auch darüber liegt, und die Rotordrehzahl (n) durch Verstellen der Rotorblätter (108) in Ihrem Blattwinkel begrenzt wird, wobei insbesondere
- der zweite Kennlinienabschnitt einen Übergangsbereich vom Teillastbereich zum Volllastbereich umfasst.

5. Verfahren nach einem der vorstehenden Ansprüche, **dadurch gekennzeichnet, dass**
- die Betriebskennlinie (302) so angepasst wird, dass die Rotordrehzahl (n) in dem zweiten Kennlinienabschnitt zumindest teilweise über eine bzw. die Rotornenndrehzahl (n_{N}) auf eine bzw. die Maximaldrehzahl (n_{M}) erhöht wird, und dass
- die Rotordrehzahl (n) für Windgeschwindigkeiten (V_{W}) oberhalb einer erhöhten Windgeschwindigkeit, die oberhalb einer Nennwindgeschwindigkeit liegt und eine höchste Windgeschwindigkeit des zweiten Kennlinienabschnitts kennzeichnet, und unterhalb einer Sturmwindgeschwindigkeit, ab der die Rotordrehzahl (n) unter Rotornenndrehzahl (n_{N}) reduziert wird, auf eine Rotordrehzahl (n) unterhalb der Maximaldrehzahl (n_{M}) verringert wird, insbesondere auf Rotornenndrehzahl (n_{N}).

6. Verfahren nach einem der vorstehenden Ansprüche, **dadurch gekennzeichnet, dass**
- die Windenergieanlage (100) an einem Aufstellort aufgestellt ist, der durch eine Höhenlage gekennzeichnet ist, die die Höhe des Aufstellortes angibt, und
- die Anpassung des zweiten Kennlinienabschnitts in Abhängigkeit von der Höhenlage des Aufstellortes und/oder einem mittleren Luftdruck an dem Aufstellort vorgenommen wird, wobei insbesondere
- Werte der Betriebsgröße (P) des zweiten Kennlinienabschnitts umso stärker zu höheren Drehzahlen hin verändert werden, je größer die Höhenlage und/oder je geringer der Luftdruck sind, und insbesondere
- eine bzw. die Maximaldrehzahl (n_{M}) umso größer gewählt wird,
- je größer die Höhenlage und/oder je geringer der Luftdruck sind.

7. Verfahren nach einem der vorstehenden Ansprüche, **dadurch gekennzeichnet, dass**
- als Windcharakteristik ein Windfeld und/oder eine zeitliche und/oder örtliche Windgeschwindigkeitsverteilung im Bereich der Windenergieanlage (100) aufgenommen wird und
- die Betriebskennlinie in Abhängigkeit von der Windcharakteristik angepasst wird, insbesondere, dass
- die Erhöhung der Rotordrehzahl (n) im zweiten Kennlinienabschnitt in Abhängigkeit von der Windcharakteristik vorgenommen wird, wobei
- die Rotordrehzahl (n) im zweiten Kennlinienabschnitt umso stärker erhöht wird, je größer eine örtliche und/oder zeitliche Variation der Windgeschwindigkeit und/oder je größer eine erfasste Böigkeit ist.

8. Verfahren nach einem der vorstehenden Ansprüche, **dadurch gekennzeichnet, dass**
- an der Windenergieanlage (100) wenigstens eine Erfassungsvorrichtung, zum Erfassen einer Windcharakteristik vorgesehen ist, insbesondere wenigstens ein Messgerät, und mittels der Erfassungsvorrichtung wenigstens eine Windeigenschaft erfasst wird aus der Liste aufweisend
- eine Windscherung,
- eine Windturbulenz und
- eine örtliche Windgeschwindigkeitsverteilung, wobei
- die Betriebskennlinie (302) in Abhängigkeit von der erfassten Windeigenschaft angepasst wird.

9. Verfahren nach einem der vorstehenden Ansprüche, **dadurch gekennzeichnet, dass**
- die Betriebskennlinie (302) in Abhängigkeit von einer Azimutausrichtung angepasst wird, insbesondere, dass
- die Erhöhung der Rotordrehzahl (n) im zweiten Kennlinienabschnitt in Abhängigkeit von einer Azimutausrichtung der Windenergieanlage (100) durchgeführt wird, insbesondere so, dass
- die Rotordrehzahl (n) im zweiten Kennlinienabschnitt umso stärker erhöht wird, je turbulenter eine durchschnittliche Windcharakteristik für eine jeweilige Azimutausrichtung ist, und/oder
- die Erhöhung der Rotordrehzahl (n) im zweiten Kennlinienabschnitt für eine Azimutausrichtung größer ist, bei der sich die Windenergieanlage in einem Nachlaufbereich einer weiteren Windenergieanlage befindet, als für eine Azimutausrichtung, bei der sich die Windenergieanlage nicht in einem Nachlauf einer weiteren Windenergieanlage befindet.

10. Verfahren nach einem der vorstehenden Ansprüche, **dadurch gekennzeichnet, dass**
- die Erhöhung der Rotordrehzahl (n) im zweiten Kennlinienabschnitt bezogen auf eine bzw. die Nenndrehzahl (n_{N}) im Bereich von 2 bis 10% liegt, insbesondere im Bereich von etwa 3 bis 8% liegt.

11. Verfahren zum Steuern einer Windenergieanlage (100), wobei
- die Windenergieanlage (100) einen Rotor (106) mit in ihrem Blattwinkel verstellbaren Rotorblättern (108) aufweist,
- der Rotor (106) mit variabler Rotordrehzahl (n) betreibbar ist,
- zum Steuern der Windenergieanlage (100) eine angepasste Betriebskennlinie (302) verwendet wird, die einen Zusammenhang zwischen der Rotordrehzahl (n) und wenigstens einer weiteren Betriebsgröße (P) beschreibt, wobei
- die angepasste Betriebskennlinie (302)
- einen ersten Kennlinienabschnitt mit einem ersten Drehzahlbereich (A1), und
- einen zweiten Kennlinienabschnitt mit einem zweiten Drehzahlbereich (A2) aufweist, wobei
- der erste Drehzahlbereich (A1) kleinere Drehzahlen aufweist, als der zweite Drehzahlbereich (A2), und
- die angepasste Betriebskennlinie (302) so ausgebildet ist, dass
- die Betriebsgröße (P) des ersten Kennlinienabschnitts gegenüber einer als optimal ermittelten Betriebskennlinie (301) erhöhte Werte aufweist und
- die Betriebsgröße (P) des zweiten Kennlinienabschnitts gegenüber einer als optimal ermittelten Betriebskennlinie (301) zu höheren Drehzahlen hin verändert ist, **dadurch gekennzeichnet, dass**
- der erste und zweite Kennlinienabschnitt der angepassten Betriebskennlinie (302) so auf einander abgestimmt sind, dass
- die Windenergieanlage im zweiten Kennlinienabschnitt mit höherer Drehzahl und im ersten Kennlinienabschnitt mit niedrigerer Drehzahl läuft, sodass
eine erwartete Gesamtanzahl Drehungen des Rotors über eine vorgegebene Laufzeit der Windenergieanlage (100) eine für die als optimal ermittelten Betriebskennlinie (301) vorgegebene Gesamtanzahl nicht überschreitet.

12. Verfahren nach Anspruch 11, **dadurch gekennzeichnet, dass**
- die als optimal ermittelte Betriebskennlinie (301) so ausgelegt ist, dass die Windenergieanlage (100) im ersten Drehzahlbereich (A1) mit einer optimalen Schnelllaufzahl betrieben wird, bei der ein maximaler Leistungsbeiwert (Cp-Wert) erreicht wird, und dass
- bei der angepassten Betriebskennlinie (302) die Windenergieanlage (100) im ersten Drehzahlbereich (A1) nicht mit der optimalen Schnelllaufzahl betrieben wird.

13. Verfahren nach Anspruch 11 oder 12, **dadurch gekennzeichnet, dass**
- wenigstens eine weitere Betriebskennlinie vorgesehen ist, die sich von der angepassten Betriebskennlinie (302) unterscheidet, und
- die angepasste Betriebskennlinie (302) und die wenigstens eine weitere Betriebskennlinie für unterschiedliche Azimutausrichtungen der Windenergieanlage (100) verwendet werden und/oder
- Windcharakteristika im Bereich der Windenenergieanlage (100) erfasst werden und die angepasste Betriebskennlinie (302) und die wenigstens eine weitere Betriebskennlinie für unterschiedliche Windcharakteristika verwendet werden und/oder
- die Rotordrehzahl (n) im zweiten Kennlinienabschnitt für eine Azimutausrichtung größer ist, bei der sich die Windenergie in einem Nachlaufbereich einer weiteren Windenergieanlage befindet, als für eine Azimutausrichtung, bei der sich die Windenergieanlage nicht in einem Nachlauf einer weiteren Windenergieanlage befindet, wobei insbesondere die angepasste Betriebskennlinie (302) für die Azimutausrichtung vorgesehen ist, bei der sich die Windenergieanlage im Nachlauf der weiteren Windenergieanlage befindet.

14. Verfahren nach einem der Ansprüche 11 bis 13, **dadurch gekennzeichnet, dass**
- die angepasste Betriebskennlinie (302), und ggf. die wenigstens eine weitere Betriebskennlinie, jeweils durch ein Verfahren nach einem der Ansprüche 1 bis 10 angepasst wurde, und/oder dass
- an der Windenergieanlage wenigstens eine Erfassungsvorrichtung, zum Erfassen einer Windcharakteristik vorgesehen ist, insbesondere wenigstens ein Messgerät, und mittels der Erfassungsvorrichtung wenigstens eine Windeigenschaft erfasst wird aus der Liste aufweisend
- eine Windscherung,
- eine Windturbulenz und
- eine örtliche Windgeschwindigkeitsverteilung, wobei
- die Betriebskennlinie in Abhängigkeit von der erfassten Windeigenschaft angepasst wird.

15. Windenergieanlage (100) mit einem Rotor (106) mit in ihrem Blattwinkel verstellbaren Rotorblättern (108), und einer Anlagensteuerung (103) zum Steuern der Windenergieanlage (100), wobei
- der Rotor (106) mit variabler Rotordrehzahl (n) betreibbar ist, und
- zum Steuern der Windenergieanlage (100) eine Betriebskennlinie (302) verwendet wird, die einen Zusammenhang zwischen der Rotordrehzahl (n) und wenigstens einer Betriebsgröße (P) beschreibt, wobei
- die Betriebskennlinie (302) in der Anlagensteuerung (103) implementiert ist, und
- einen ersten Kennlinienabschnitt mit einem ersten Drehzahlbereich (A1), und
- einen zweiten Kennlinienabschnitt mit einem zweiten Drehzahlbereich (A2) aufweist, wobei
- die Betriebskennlinie (302) gegenüber einer bisherigen Betriebskennlinie (301) so angepasst ist, dass
- Werte der Betriebsgröße (P) des ersten Kennlinienabschnitts erhöht wurden, und
- Werte der Betriebsgröße (P) des zweiten Kennlinienabschnitts zu höheren Drehzahlen hin verändert wurden, und **dadurch gekennzeichnet, dass**
- die Anpassung der Betriebskennlinie (302) so erfolgt ist, dass die Windenergieanlage im zweiten Kennlinienabschnitt mit höherer Drehzahl und im ersten Kennlinienabschnitt mit niedrigerer Drehzahl gelaufen ist, sodass eine erwartete Gesamtanzahl Drehungen des Rotors (106) über eine vorgegebene Laufzeit der Windenergieanlage (100) etwa gleich geblieben ist.

16. Windenergieanlage (100) nach Anspruch 15, **dadurch gekennzeichnet, dass**
- an der Windenergieanlage (100) wenigstens eine Erfassungsvorrichtung, zum Erfassen einer Windcharakteristik vorgesehen ist, insbesondere wenigstens ein Messgerät, und mittels der Erfassungsvorrichtung wenigstens eine Windeigenschaft erfasst wird aus der Liste aufweisend
- eine Windscherung,
- eine Windturbulenz und
- eine örtliche Windgeschwindigkeitsverteilung, wobei
- die Betriebskennlinie in Abhängigkeit von der erfassten Windeigenschaft angepasst wird.

17. Windenergieanlage (100), mit einem Rotor (106) mit in ihrem Blattwinkel verstellbaren Rotorblättern (108), und einer Anlagensteuerung (103) zum Steuern der Windenergieanlage (100), wobei
- der Rotor (106) mit variabler Rotordrehzahl (n) betreibbar ist, und
- zum Steuern der Windenergieanlage (100) eine Betriebskennlinie (302) verwendet wird, die einen Zusammenhang zwischen der Rotordrehzahl (n) und wenigstens einer Betriebsgröße (P) beschreibt, wobei
- die Betriebskennlinie (302) in der Anlagensteuerung (103) implementiert ist, und
- die Windenergieanlage (100) mit einem Verfahren nach einem der Ansprüche 11 bis 14 gesteuert wird, wobei optional
- die Windenergieanlage (100) gemäß Anspruch 15 oder 16 ausgebildet ist.

## Claims

1. A method for adapting an operating characteristic (302) of a wind power installation (100), wherein
- the wind power installation (100) has a rotor (106) with rotor blades (108), the blade angle of which is adjustable,
- the rotor (106) is operable with a variable rotor rotational speed (n),
- in order to control the wind power installation (100), use is made of an operating characteristic (302) which describes a relationship between the rotor rotational speed (n) and at least one operating variable (P), wherein
- the operating characteristic (302) has
- a first characteristic portion with a first rotational speed range (A1), and
- a second characteristic portion with a second rotational speed range (A2), wherein
- the first rotational speed range (A1) has lower rotational speeds (n) than the second rotational speed range (A2), and
- the operating characteristic (302) is adapted in such a manner that
- values of the operating variable (P) of the first characteristic portion are increased, and
- values of the operating variable (P) of the second characteristic portion are changed toward higher rotational speeds, and **characterized in that**
- the operating characteristic (302) is adapted in such a manner that
the wind power installation operates at a higher rotational speed in the second characteristic portion and at a lower rotational speed in the first characteristic portion, such that
an expected total number of revolutions of the rotor (106) over a predetermined lifetime of the wind power installation (100) remains approximately the same.

2. The method as claimed in claim 1, **characterized in that**
- the first rotational speed range (A1) lies above a switching-on rotational speed (n_{A}) up to a transition rotational speed (n_{U}), wherein the transition rotational speed lies in the range of 80% to 100% of a nominal rotational speed, and
- the second rotational speed range (A2) lies at and above the transition rotational speed (n_{U}), wherein in particular
- the second characteristic portion is changed toward higher rotational speeds such that, after adaptation of the operating characteristic (302), the second rotational speed range (A2) extends up to a maximum rotational speed (n_{M}) which lies above a nominal rotational speed (n_{N}).

3. The method as claimed in claim 1 or 2, **characterized in that**
- the operating variable (P) used is an operating power variable (P) which is representative of a generator torque, a generator power (P) or a power output, so that the operating characteristic (302) specifies a relationship between the rotor rotational speed (n) and the operating power variable (P).

4. The method as claimed in one of the preceding claims, **characterized in that**
- the first characteristic portion lies completely in a partial load region in which the wind speed lies below a nominal wind speed, and/or the rotor rotational speed (n) lies below a rotor nominal rotational speed (n_{N}), and
- the second characteristic portion lies at least partially in a full load region in which the wind speed reaches the nominal wind speed and in particular also lies above same, and the rotor rotational speed (n) is limited by adjustment of the rotor blades (108) in their blade angle, wherein in particular
- the second characteristic portion comprises a transition region from the partial load region to the full load region.

5. The method as claimed in one of the preceding claims, **characterized in that**
- the operating characteristic (302) is adapted in such a manner that the rotor rotational speed (n) in the second characteristic portion is increased at least partially via a or the rotor nominal rotational speed (n_{N}) to a or the maximum rotational speed (n_{M}), and that
- for wind speeds (V_{W}) above an increased wind speed which lies above a nominal wind speed and characterizes a highest wind speed of the second characteristic portion, and below a storm wind speed, from which the rotor rotational speed (n) is reduced below the rotor nominal rotational speed (n_{N}), the rotor rotational speed (n) is reduced to a rotor rotational speed (n) below the maximum rotational speed (n_{M}), in particular to a rotor nominal rotation speed (n_{N}).

6. The method as claimed in one of the preceding claims, **characterized in that**
- the wind power installation (100) is erected at an erection site which is **characterized by** an elevation which specifies the height of the erection site, and
- the adaptation of the second characteristic portion is undertaken depending on the elevation of the erection site and/or on a mean air pressure at the erection site, wherein in particular
- values of the operating variable (P) of the second characteristic portion are changed more powerfully to higher rotational speeds, the higher the elevation and/or the lower the air pressure are/is, and in particular
- a or the maximum rotational speed (n_{M}) is selected to be greater
- the higher the elevation and/or the lower the air pressure are/is.

7. The method as claimed in one of the preceding claims, **characterized in that**
- a wind field and/or a temporal and/or local wind speed distribution in the region of the wind power installation (100) is recorded as the wind characteristic, and
- the operating characteristic is adapted depending on the wind characteristic, in particular that
- the increase in the rotor rotational speed (n) in the second characteristic portion is undertaken depending on the wind characteristic, wherein
- the rotor rotational speed (n) in the second characteristic portion is increased more powerfully, the greater a local and/or temporal variation in the wind speed and/or the greater a detected gustiness is.

8. The method as claimed in one of the preceding claims, **characterized in that**
- at least one detection device, for detecting a wind characteristic, in particular at least one measuring instrument, is provided on the wind power installation (100), and the detection device is used to detect at least one wind property from the list comprising
- wind shear,
- wind turbulence, and
- a local wind speed distribution, wherein
- the operating characteristic (302) is adapted depending on the detected wind property.

9. The method as claimed in one of the preceding claims, **characterized in that**
- the operating characteristic (302) is adapted depending on azimuthal orientation, in particular that
- the increase in the rotor rotational speed (n) in the second characteristic portion is carried out depending on an azimuthal orientation of the wind power installation (100), in particular such that
- the rotor rotational speed (n) in the second characteristic portion is increased more powerfully, the more turbulent an average wind characteristic for a respective azimuthal orientation is, and/or
- the increase in the rotor rotational speed (n) in the second characteristic portion is greater for an azimuthal orientation in which the wind power installation is located in a wake region of a further wind power installation than for an azimuthal orientation in which the wind power installation is not located in a wake of a further wind power installation.

10. The method as claimed in one of the preceding claims, **characterized in that**
- the increase in the rotor rotational speed (n) in the second characteristic portion lies in the range of 2 to 10%, in particular in the range of approximately 3 to 8%, with respect to a or the nominal rotational speed (n_{N}).

11. A method for controlling a wind power installation (100), wherein
- the wind power installation (100) has a rotor (106) with rotor blades (108), the blade angle of which is adjustable,
- the rotor (106) is operable with a variable rotor rotational speed (n),
- in order to control the wind power installation (100), use is made of an adapted operating characteristic (302) which describes a relationship between the rotor rotational speed (n) and at least one further operating variable (P), wherein
- the adapted operating characteristic (302) has
- a first characteristic portion with a first rotational speed range (A1), and
- a second characteristic portion with a second rotational speed range (A2), wherein
- the first rotational speed range (A1) has lower rotational speeds than the second rotational speed range (A2), and
- the adapted operating characteristic (302) is designed in such a manner that
- the operating variable (P) of the first characteristic portion has increased values in relation to an operating characteristic (301) identified as optimum, and
- the operating variable (P) of the second characteristic portion is changed toward higher rotational speeds in relation to an operating characteristic (301) identified as optimum, **characterized in that**
- the first and second characteristic portion of the adapted operating characteristic (302) are coordinated with each other in such a manner that
- the wind power installation operates at a higher rotational speed in the second characteristic portion and at a lower rotational speed in the first characteristic portion, such that
an expected total number of rotations of the rotor over a predetermined lifetime of the wind power installation (100) does not exceed a total number predetermined for the operating characteristic (301) identified as optimum.

12. The method as claimed in claim 11, **characterized in that**
- the operating characteristic (301) identified as optimum is designed in such a manner that the wind power installation (100) is operated in the first rotational speed range (A1) with an optimum tip-speed ratio at which a maximum power coefficient (Cp value) is reached, and that
- when the operating characteristic (302) is adapted, the wind power installation (100) is not operated in the first rotational speed range (A1) with the optimum tip-speed ratio.

13. The method as claimed in claim 11 or 12, **characterized in that**
- at least one further operating characteristic is provided which differs from the adapted operating characteristic (302), and
- the adapted operating characteristic (302) and the at least one further operating characteristic are used for different azimuthal orientations of the wind power installation (100), and/or
- wind characteristics in the region of the wind power installation (100) are detected, and the adapted operating characteristic (302) and the at least one further operating characteristic are used for different wind characteristics, and/or
- the rotor rotational speed (n) in the second characteristic portion is greater for an azimuthal orientation in which the wind power is located in a wake region of a further wind power installation than for an azimuthal orientation in which the wind power installation is not located in a wake of a further wind power installation, wherein in particular the adapted operating characteristic (302) is provided for the azimuthal orientation in which the wind power installation is located in the wake of the further wind power installation.

14. The method as claimed in one of claims 11 to 13, **characterized in that**
- the adapted operating characteristic (302), and optionally the at least one further operating characteristic, have each been adapted by a method as claimed in one of claims 1 to 10, and/or that
- at least one detection device, for detecting a wind characteristic, in particular at least one measuring instrument, is provided on the wind power installation, and the detection device is used to detect at least one wind property from the list comprising
- wind shear,
- wind turbulence, and
- a local wind speed distribution, wherein
- the operating characteristic is adapted depending on the detected wind property.

15. A wind power installation (100) having a rotor (106) with rotor blades (108), the blade angle of which is adjustable, and an installation controller (103) for controlling the wind power installation (100), wherein
- the rotor (106) is operable with a variable rotor rotational speed (n), and
- in order to control the wind power installation (100), use is made of an operating characteristic (302) which describes a relationship between the rotor rotational speed (n) and at least one operating variable (P), wherein
- the operating characteristic (302) is implemented in the installation controller (103), and has
- a first characteristic portion with a first rotational speed range (A1), and
- a second characteristic portion with a second rotational speed range (A2), wherein
- the operating characteristic (302) is adapted in relation to a previous operating characteristic (301) in such a manner that
- values of the operating variable (P) of the first characteristic portion have been increased, and
- values of the operating variable (P) of the second characteristic portion have been changed toward higher rotational speeds, and **characterized in that**
- the operating characteristic (302) is adapted in such a manner that
the wind power installation operated at a higher speed in the second characteristic portion and at a lower speed in the first characteristic portion, so that
an expected total number of rotations of the rotor (106) over a predetermined lifetime of the wind power installation (100) has remained approximately the same.

16. The wind power installation (100) as claimed in claim 15, **characterized in that**
- at least one detection device, for detecting a wind characteristic, in particular at least one measuring instrument, is provided on the wind power installation (100), and the detection device is used to detect at least one wind property from the list comprising
- wind shear,
- wind turbulence, and
- a local wind speed distribution, wherein
- the operating characteristic is adapted depending on the detected wind property.

17. A wind power installation (100), having a rotor (106) with rotor blades (108), the blade angle of which is adjustable, and an installation controller (103) for controlling the wind power installation (100), wherein
- the rotor (106) is operable with a variable rotor rotational speed (n), and
- in order to control the wind power installation (100), use is made of an operating characteristic (302) which describes a relationship between the rotor rotational speed (n) and at least one operating variable (P), wherein
- the operating characteristic (302) is implemented in the installation controller (103), and
- the wind power installation (100) is controlled by a method as claimed in one of claims 11 to 14, wherein optionally
- the wind power installation (100) is designed according to claim 15 or 16.

## Revendications

1. Procédé d'adaptation d'une courbe caractéristique de fonctionnement (302) d'une éolienne (100), dans lequel
- l'éolienne (100) présente un rotor (106) avec des pales de rotor (108) dont l'angle de pale est ajustable,
- le rotor (106) peut fonctionner à une vitesse de rotation de rotor (n) variable, et
- une courbe caractéristique de fonctionnement (302) est utilisée pour commander l'éolienne (100), laquelle décrit une relation entre la vitesse de rotation de rotor (n) et au moins une grandeur de fonctionnement (P), dans lequel
- la courbe de fonctionnement (302) présente
- une première section de courbe caractéristique avec une première plage de vitesse de rotation (A1), et
- une deuxième section de courbe caractéristique avec une deuxième plage de vitesse de rotation (A2), dans lequel
- la première plage de vitesse de rotation (A1) présente des vitesses de rotation (n) inférieures à celles de la deuxième plage de vitesse de rotation (A2), et
- la courbe caractéristique de fonctionnement (302) est adaptée de telle sorte que
- des valeurs de la grandeur de fonctionnement (P) de la première section de courbe caractéristique sont augmentées, et
- des valeurs de la grandeur de fonctionnement (P) de la deuxième section de courbe caractéristique sont modifiées vers des vitesses de rotation plus élevées, et **caractérisé en ce que**
- l'adaptation de la courbe caractéristique de fonctionnement (302) s'effectue de telle sorte que
l'éolienne fonctionne à une vitesse de rotation plus élevée dans la deuxième section de courbe caractéristique et à une vitesse de rotation plus faible dans la première section de courbe caractéristique, si bien que
un nombre total attendu de rotations du rotor (106) reste à peu près le même pendant une durée de fonctionnement prédéfinie de l'éolienne (100).

2. Procédé selon la revendication 1, **caractérisé en ce que**
- la première plage de vitesse de rotation (A1) est supérieure à une vitesse de rotation d'enclenchement (n_{A}) jusqu'à une vitesse de rotation de transition (n_{U}), dans lequel la vitesse de rotation de transition se situe dans la plage de 80 % à 100 % d'une vitesse de rotation nominale, et
- la deuxième plage de vitesse de rotation (A2) est de l'ordre de, et au-dessus de, la vitesse de rotation de transition (n_{U}), dans lequel en particulier
- la deuxième section de courbe caractéristique est modifiée vers des vitesses de rotation plus élevées de telle sorte que la deuxième plage de vitesse de rotation (A2) va, après l'adaptation de la courbe caractéristique de fonctionnement (302), jusqu'à une vitesse de rotation maximale (n_{M}) qui est supérieure à une vitesse de rotation nominale (n_{N}).

3. Procédé selon la revendication 1 ou 2, **caractérisé en ce que**
- une grandeur de puissance de fonctionnement (P) représentative d'un couple de générateur, d'une puissance de générateur (P) ou d'une puissance de sortie est utilisée comme grandeur de fonctionnement (P), si bien que la courbe caractéristique de fonctionnement (302) indique une relation entre la vitesse de rotation de rotor (n) et la grandeur de puissance de fonctionnement (P).

4. Procédé selon l'une quelconque des revendications précédentes, **caractérisé en ce que**
- la première section de courbe caractéristique se trouve totalement dans une plage de charge partielle dans laquelle la vitesse du vent est inférieure à une vitesse nominale du vent et/ou la vitesse de rotation de rotor (n) est inférieure à une vitesse nominale de rotor (n_{N}), et
- la deuxième section de courbe caractéristique se trouve au moins en partie dans une plage de pleine charge dans laquelle la vitesse du vent atteint la vitesse nominale du vent et en particulier est également supérieure à celle-ci, et la vitesse de rotation de rotor (n) est limitée par l'ajustement des pales de rotor (108) dans leur angle de pale, dans lequel en particulier
- la deuxième section de courbe caractéristique comprend une plage de transition de la plage de charge partielle à la plage de pleine charge.

5. Procédé selon l'une quelconque des revendications précédentes, **caractérisé en ce que**
- la courbe caractéristique de fonctionnement (302) est adaptée de telle sorte que la vitesse de rotation de rotor (n) dans la deuxième section de courbe caractéristique est augmentée au moins en partie au-dessus d'une ou de la vitesse de rotation de rotation nominale de rotor (n_{N}) sur une ou la vitesse de rotation maximale (n_{M}), et
- la vitesse de rotation de rotor (n) pour des vitesses de vent (V_{w}) supérieures à une vitesse de vent augmentée, qui est supérieure à une vitesse de vent nominale et caractérise une vitesse de vent maximale de la deuxième section de courbe caractéristique, et inférieures à une vitesse de vent de tempête, à partir de laquelle la vitesse de rotation de rotor (n) est réduite en dessous de la vitesse nominale de rotor (n_{N}), est réduite à une vitesse de rotation de rotor (n) inférieure à la vitesse de rotation maximale (n_{M}), en particulier à la vitesse de rotation nominale de rotor (n_{N}).

6. Procédé selon l'une quelconque des revendications précédentes, **caractérisé en ce que**
- l'éolienne (100) est placée sur un lieu d'installation qui est **caractérisé par** une altitude indiquant l'altitude du lieu d'installation, et
- l'adaptation de la deuxième section de courbe caractéristique est réalisée en fonction de la position en altitude du lieu d'installation et/ou d'une pression atmosphérique moyenne sur le lieu d'installation, dans lequel en particulier
- des valeurs de la grandeur de fonctionnement (P) de la deuxième section de courbe caractéristique sont modifiées d'autant plus fortement vers des vitesses de rotation plus élevées que la position en altitude est grande et/ou que la pression atmosphérique est faible, et en particulier
- plus une ou la vitesse de rotation maximale (n_{M}) sélectionnée est importante,
- plus la position en altitude est élevée et/ou plus la pression atmosphérique est basse.

7. Procédé selon l'une quelconque des revendications précédentes, **caractérisé en ce que**
- un champ de vent et/ou une distribution temporelle et/ou locale de la vitesse du vent dans la zone de l'éolienne (100) sont relevés comme caractéristique du vent et
- la courbe caractéristique de fonctionnement est adaptée en fonction de la caractéristique du vent, en particulier que
- l'augmentation de la vitesse de rotation de rotor (n) dans la deuxième section de courbe caractéristique est réalisée en fonction de la caractéristique du vent, dans lequel
- la vitesse de rotation de rotor (n) dans la deuxième section de courbe caractéristique augmente d'autant plus qu'une variation locale et/ou temporelle de la vitesse du vent et/ou qu'une rafale détectée est importante.

8. Procédé selon l'une quelconque des revendications précédentes, **caractérisé en ce que**
- est prévu sur l'éolienne (100) au moins un dispositif de détection pour la détection d'une caractéristique du vent, en particulier au moins un appareil de mesure, et est détectée, au moyen du dispositif de détection , au moins une caractéristique du vent issue de la liste présentant
- un cisaillement du vent,
- une turbulence du vent et
- une distribution locale de la vitesse du vent, dans lequel
- la courbe caractéristique de fonctionnement (302) est adaptée en fonction de la caractéristique du vent détectée.

9. Procédé selon l'une quelconque des revendications précédentes, **caractérisé en ce que**
- la courbe caractéristique de fonctionnement (302) est adaptée en fonction d'une orientation d'azimut, en particulier que
- l'augmentation de la vitesse de rotation de rotor (n) dans la deuxième section de courbe caractéristique est mise en œuvre en fonction d'une orientation d'azimut de l'éolienne (100), en particulier de telle sorte que
- la vitesse de rotation de rotor (n) augmente d'autant plus dans la deuxième section de courbe caractéristique que la caractéristique du vent moyenne est plus turbulente pour une orientation d'azimut donnée, et/ou
- l'augmentation de la vitesse de rotation de rotor (n) dans la deuxième section de courbe caractéristique est plus importante pour une orientation d'azimut où l'éolienne se trouve dans une zone d'inertie d'une autre éolienne que pour une orientation d'azimut où l'éolienne ne se trouve pas dans une zone d'inertie d'une autre éolienne.

10. Procédé selon l'une quelconque des revendications précédentes, **caractérisé en ce que**
- l'augmentation de la vitesse de rotation de rotor (n) dans la deuxième section de courbe caractéristique par rapport à une ou à la vitesse nominale de rotation (n_{N}) se situe dans la plage de 2 à 10 %, en particulier dans la plage d'environ 3 à 8 %.

11. Procédé destiné à commander une éolienne (100), dans lequel
- l'éolienne (100) présente un rotor (106) avec des pales de rotor (108) dont l'angle de pale est ajustable,
- le rotor (106) peut fonctionner à une vitesse de rotation de rotor (n) variable, et
- une courbe caractéristique de fonctionnement adaptée (302) est utilisée pour commander l'éolienne (100), laquelle décrit une relation entre la vitesse de rotation de rotor (n) et au moins une autre grandeur de fonctionnement (P), dans lequel
- la courbe caractéristique de fonctionnement adaptée (302) présente
- une première section de courbe caractéristique avec une première plage de vitesse de rotation (A1), et
- une deuxième section de courbe caractéristique avec une deuxième plage de vitesse de rotation (A2), dans lequel
- la première plage de vitesse de rotation (A1) présente des vitesses de rotation inférieures à celles de la deuxième plage de vitesse de rotation (A2), et
- la courbe caractéristique de fonctionnement adaptée (302) est réalisée de sorte que
- la grandeur de fonctionnement (P) de la première section de courbe caractéristique présente des valeurs augmentées par rapport à une courbe caractéristique de fonctionnement (301) déterminée comme optimale et
- la grandeur de fonctionnement (P) de la deuxième section de courbe caractéristique est modifiée par rapport à une courbe caractéristique de fonctionnement (301) déterminée comme optimale vers des vitesses de rotation plus élevées, **caractérisé en ce que**
- les première et deuxième sections de courbe caractéristique de la courbe caractéristique de fonctionnement adaptée (302) sont harmonisées l'une avec l'autre de telle sorte que
- l'éolienne fonctionne à une vitesse de rotation plus élevée dans la deuxième section de courbe caractéristique et à une vitesse de rotation plus faible dans la première section de courbe caractéristique, si bien que
un nombre total attendu de rotations du rotor sur une durée de fonctionnement prédéfinie de l'éolienne (100) ne dépasse pas un nombre total prédéfini pour la courbe caractéristique de fonctionnement (301) déterminée comme optimale.

12. Procédé selon la revendication 11, **caractérisé en ce que**
- la courbe caractéristique de fonctionnement (301) déterminée comme optimale est conçue de telle sorte que l'éolienne (100) fonctionne dans la première plage de vitesse de rotation (A1) à un régime de fonctionnement rapide optimal pour lequel un coefficient de puissance maximal (valeur Cp) est atteint, et que
- dans le cas de la courbe caractéristique de fonctionnement adaptée (302), l'éolienne (100) ne fonctionne pas au régime de fonctionnement rapide optimal dans la première plage de vitesse de rotation (A1).

13. Procédé selon la revendication 11 ou 12, **caractérisé en ce que**
- au moins une autre courbe caractéristique de fonctionnement, qui est différente de la courbe caractéristique de fonctionnement adaptée (302), est prévue, et
- la courbe de fonctionnement adaptée (302) et l'au moins une autre courbe de fonctionnement sont utilisées pour différentes orientations d'azimut de l'éolienne (100) et/ou
- des caractéristiques de vent sont détectées dans la zone de l'éolienne (100) et la courbe caractéristique de fonctionnement adaptée (302) et l'au moins une autre courbe caractéristique de fonctionnement sont utilisées pour différentes caractéristiques de vent et/ou
- la vitesse de rotation de rotor (n) dans la deuxième section de courbe caractéristique est supérieure, pour une orientation d'azimut où l'éolienne se trouve dans une zone d'inertie d'une autre éolienne, que pour une orientation d'azimut où l'éolienne ne se trouve pas dans une zone d'inertie d'une autre éolienne, dans lequel la courbe caractéristique de fonctionnement adaptée (302) est en particulier prévue pour l'orientation d'azimut où l'éolienne se trouve dans la zone d'inertie de l'autre éolienne.

14. Procédé selon l'une quelconque des revendications 11 à 13, **caractérisé en ce que**
- la courbe caractéristique de fonctionnement adaptée (302), et le cas échéant l'au moins une autre courbe caractéristique de fonctionnement, a été adaptée respectivement par un procédé selon l'une quelconque des revendications 1 à 10, et/ou que
- est prévu sur l'éolienne au moins un dispositif de détection pour la détection d'une caractéristique du vent, en particulier au moins un appareil de mesure, et est détectée, au moyen du dispositif de détection, au moins une caractéristique du vent issue de la liste présentant
- un cisaillement du vent,
- une turbulence du vent et
- une distribution locale de la vitesse du vent, dans lequel
- la courbe caractéristique de fonctionnement est adaptée en fonction de la caractéristique du vent détectée.

15. Éolienne (100) avec un rotor (106) avec des pales de rotor (108) dont l'angle de pale est ajustable, et une unité de commande d'installation (103) pour commander l'éolienne (100), dans laquelle
- le rotor (106) peut fonctionner à une vitesse de rotation de rotor (n) variable, et
- une courbe caractéristique de fonctionnement (302) est utilisée pour commander l'éolienne (100), laquelle décrit une relation entre la vitesse de rotation de rotor (n) et au moins une grandeur de fonctionnement (P), dans laquelle
- la courbe caractéristique de fonctionnement (302) est implémentée dans l'unité de commande d'installation (103), et présente
- une première section de courbe caractéristique avec une première plage de vitesse de rotation (A1), et
- une deuxième section de courbe caractéristique avec une deuxième plage de vitesse de rotation (A2), dans laquelle
- la courbe caractéristique de fonctionnement (302) est adaptée par rapport à une courbe caractéristique de fonctionnement (301) précédente de telle sorte que
- des valeurs de la grandeur de fonctionnement (P) de la première section de courbe caractéristique ont été augmentées, et
- des valeurs de la grandeur de fonctionnement (P) de la deuxième section de courbe caractéristique ont été modifiées vers des vitesses de rotation plus élevées, et **caractérisée en ce que**
- l'adaptation de la courbe caractéristique de fonctionnement (302) a été effectuée de telle sorte que l'éolienne a fonctionné à une vitesse de rotation plus élevée dans la deuxième section de courbe caractéristique et à une vitesse plus faible dans la première section de courbe caractéristique, si bien
qu'un nombre total attendu de rotations du rotor (106) est resté à peu près le même pendant une durée de fonctionnement prédéfinie de l'éolienne (100).

16. Éolienne (100) selon la revendication 15, **caractérisée en ce que**
- est prévu sur l'éolienne (100) au moins un dispositif de détection pour la détection d'une caractéristique du vent, en particulier au moins un appareil de mesure, et est détectée, au moyen du dispositif de détection, au moins une caractéristique du vent issue de la liste présentant
- un cisaillement du vent,
- une turbulence du vent et
- une distribution locale de la vitesse du vent, dans laquelle
- la courbe caractéristique de fonctionnement est adaptée en fonction de la caractéristique du vent détectée.

17. Éolienne (100), avec un rotor (106) avec des pales de rotor (108) dont l'angle de pale est ajustable, et une unité de commande d'installation (103) pour commander l'éolienne (100), dans laquelle
- le rotor (106) peut fonctionner à une vitesse de rotation de rotor (n) variable, et
- une courbe caractéristique de fonctionnement (302) est utilisée pour commander l'éolienne (100), laquelle décrit une relation entre la vitesse de rotation de rotor (n) et au moins une grandeur de fonctionnement (P), dans laquelle
- la courbe caractéristique de fonctionnement (302) est implémentée dans l'unité de commande d'installation (103), et
- l'éolienne (100) est commandée avec un procédé selon l'une quelconque des revendications 11 à 14, dans laquelle en option
- l'éolienne (100) est réalisée selon la revendication 15 ou 16.
